(19) Europäisches Patentamt
European Patent Office
Office européen des brevets

(11) EP 4 556 513 A1

(12) **EUROPEAN PATENT APPLICATION**
published in accordance with Art. 153(4) EPC

(43) Date of publication:
**21.05.2025 Bulletin 2025/21**

(21) Application number: **23839279.9**

(22) Date of filing: **12.05.2023**

(51) International Patent Classification (IPC):
***C08J 5/06*** *(2006.01)* ***B29C 45/00*** *(2006.01)*
***D06M 11/74*** *(2006.01)* ***D06M 13/322*** *(2006.01)*
***D06M 15/55*** *(2006.01)* ***B29K 101/12*** *(2006.01)*
***B29K 105/12*** *(2006.01)* ***D06M 101/40*** *(2006.01)*

(52) Cooperative Patent Classification (CPC):
**B29C 45/00; C08J 5/06; D06M 11/74; D06M 13/322; D06M 15/55**

(86) International application number:
**PCT/JP2023/017958**

(87) International publication number:
**WO 2024/014101 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.07.2022 JP 2022113454**

(71) Applicant: **Nitta Corporation**
**Osaka-shi, Osaka 556-0022 (JP)**

(72) Inventors:
- **KOMUKAI Takuji**
  **Osaka-shi, Osaka 556-0022 (JP)**
- **ONIZUKA Maki**
  **Osaka-shi, Osaka 556-0022 (JP)**

(74) Representative: **Bandpay & Greuter**
**11, rue Christophe Colomb**
**75008 Paris (FR)**

(54) **INJECTION MOLDED BODY AND METHOD FOR PRODUCING SAME, METHOD FOR PRODUCING COMPOSITE FIBER, CNT-ATTACHED CARBON FIBER AND METHOD FOR PRODUCING SAME, AND METHOD FOR PRODUCING CARBON FIBER COMPOSITE**

(57) To provide an injection molded article and a method for manufacturing the injection molded article, a method for manufacturing a composite fiber, a CNT-adhered carbon fiber and a method for manufacturing the CNT-adhered carbon fiber, and a method for manufacturing a carbon fiber composite material, which can further improve the mechanical strength. A molded article 10 is injection molded using composite fibers 11 as reinforcing fibers. A structure including a plurality of carbon nanotubes is formed on a surface of each of the composite fibers 11. The carbon nanotubes have a bent shape. The carbon nanotubes adhere to a surface of a carbon fiber, which is a curved surface, in various postures to form the structure. A sizing agent cross-links the carbon nanotubes in direct contact with each other via a carbodiimide-derived structure formed by a reaction between a functional group of the carbon nanotubes and a carbodiimide group.

Fig. 1

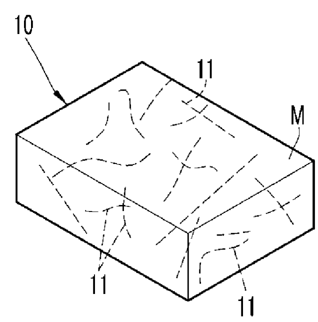


EP 4 556 513 A1

## Description

Technical Field

The present invention relates to an injection molded article and a method for manufacturing the injection molded article, a method for manufacturing a composite fiber, a CNT-adhered carbon fiber and a method for manufacturing the CNT-adhered carbon fiber, and a method for manufacturing a carbon fiber composite material.

Background Art

The injection molded article is suitable for mass production because the injection molded article is molded by injecting a molten thermoplastic resin into a mold. The injection molded article is known that has increased mechanical strength by incorporating reinforcing fibers in a matrix resin formed of a thermoplastic resin. For example, PTL 1 discloses that mechanical strength of gear teeth is increased by injection molding fibers onto the teeth such that the fibers are oriented at tips of the teeth.

On the other hand, composite fibers (composite materials) including carbon fibers and a structure having a plurality of carbon nanotubes (hereinafter, referred to as CNTs) adhered to surfaces of the carbon fibers are known (for example, see PTL 2). The structure of the composite fibers forms a network structure in which the plurality of CNTs are connected to each other, and is adhered to the surfaces of the carbon fibers. The structure of PTL 2 has a large thickness due to the use of the CNTs having a bent shape.

Citation List

Patent Literature

PTL 1: JP2008-008404A
PTL 2: WO2019/240094A1

Summary of Invention

Technical Problem

Although the injection molded article containing the reinforcing fibers as described above has a certain degree of improvement in the mechanical strength, even higher mechanical strength is desired. However, even if a fiber volume content of the carbon fibers in the injection molded article is increased, a significant improvement in the mechanical strength has not been obtained.

An object of the present invention is to provide an injection molded article and a method for manufacturing the injection molded article, a method for manufacturing a composite fiber, a CNT-adhered carbon fiber and a method for manufacturing the CNT-adhered carbon fiber, and a method for manufacturing a carbon fiber composite material, which can further improve the mechanical strength.

Solution to Problem

The injection molded article of the present invention includes a plurality of composite fibers and a matrix resin formed of a thermoplastic resin in which the plurality of composite fibers are embedded. The plurality of composite fibers include a carbon fiber, a structure that includes a plurality of carbon nanotubes having a bent shape with a bent portion, that forms a network structure including a contact portion where the carbon nanotubes are in direct contact with each other, and that is provided on a surface of the carbon fiber, and a sizing agent that is provided around at least the contact portion to cross-link the carbon nanotubes in direct contact with each other via a structure formed by a reaction with a functional group of the carbon nanotubes.

The method for manufacturing the injection molded article of the present invention includes a kneading step of kneading a composite fiber and a thermoplastic resin, and an injection step of injection-molding the thermoplastic resin containing the composite fiber to obtain an injection molded article in which the composite fiber is embedded in a matrix resin formed of the thermoplastic resin. The composite fiber includes a carbon fiber, a structure that includes a plurality of carbon nanotubes having a bent shape with a bent portion, that forms a network structure including a contact portion where the carbon nanotubes are in direct contact with each other, and that is provided on a surface of the carbon fiber, and a sizing

agent that is provided around at least the contact portion to cross-link the carbon nanotubes in direct contact with each other via a structure formed by a reaction with a functional group of the carbon nanotubes.

The method for manufacturing a composite fiber of the present invention includes a structure forming step of forming, on a surface of a carbon fiber, a structure that includes a plurality of carbon nanotubes having a bent shape with a bent portion, and that forms a network structure including a contact portion where the carbon nanotubes are in direct contact with each other, a sizing treatment step of bringing the carbon fiber on which the structure is formed into contact with a sizing treatment solution in which a raw material of a sizing agent that cross-links the carbon nanotubes in direct contact with each other is dissolved, and applying the sizing agent to obtain a composite fiber, and a post-cure step of post-curing the sizing agent of the composite fiber.

The CNT-adhered carbon fiber of the present invention is a product obtained by removing a resin from a composite in which the resin and a carbon fiber are integrated, the carbon fiber being provided with, on a surface thereof, a structure that includes a plurality of carbon nanotubes having a bent shape with a bent portion and that forms a network structure including a contact portion where the carbon nanotubes are in direct contact with each other.

The method for manufacturing the CNT-adhered carbon fiber of the present invention includes a preparation step of preparing a composite in which a resin and a carbon fiber are integrated, the carbon fiber being provided with, on a surface thereof, a structure that includes a plurality of carbon nanotubes having a bent shape with a bent portion and that forms a network structure including a contact portion where the carbon nanotubes are in direct contact with each other, and a removing step of removing the resin from the composite to obtain a CNT-adhered carbon fiber.

The method for manufacturing a carbon fiber composite material of the present invention includes a preparation step of preparing a composite in which a resin and a carbon fiber are integrated, the carbon fiber being provided with, on a surface thereof, a structure that includes a plurality of carbon nanotubes having a bent shape with a bent portion and that forms a network structure including a contact portion where the carbon nanotubes are in direct contact with each other, a removing step of removing the resin from the composite to obtain a CNT-adhered carbon fiber, and a composite material manufacturing step of obtaining a carbon fiber composite material in which the CNT-adhered carbon fiber is embedded in a matrix resin.

Advantageous Effects of Invention

According to the present invention, the mechanical strength of the injection molded article can be further improved using, as a reinforcing fiber of the injection molded article, the composite fiber in which the structure including the plurality of carbon nanotubes having a bent shape is formed on the surface of the carbon fiber and the sizing agent that cross-links the carbon nanotubes in direct contact with each other of the structure is applied. In addition, the mechanical strength of the injection molded article can be further improved by post-curing the sizing agent.

In addition, according to the present invention, the product obtained by removing the resin from the composite containing the carbon fiber having the structure provided on the surface thereof is used as the CNT-adhered carbon fiber, and thus it is possible to easily perform the recycling to increase the mechanical strength of the molded article.

Brief Description of Drawings

Fig. 1 is an explanatory diagram schematically illustrating a molded article according to an embodiment.
Fig. 2 is an explanatory diagram illustrating composite fibers.
Fig. 3 is an explanatory diagram illustrating an adhesion state of a sizing agent to CNTs.
Fig. 4 is an explanatory diagram illustrating an adhesion state of the sizing agent in a contact portion where the CNTs are in contact with each other.
Fig. 5 is an explanatory diagram illustrating another adhesion state of the sizing agent to the CNTs.
Fig. 6 is an explanatory diagram illustrating another adhesion state of the sizing agent in the contact portion where the CNTs are in contact with each other.
Fig. 7 is an explanatory diagram illustrating an overview of a procedure for manufacturing the molded article.
Fig. 8 is an explanatory diagram illustrating a configuration of an adhesion device that causes the CNTs to adhere to a carbon fiber and a passing position of the carbon fiber in a dispersion.
Fig. 9 is a graph illustrating a relationship between a post-cure temperature and a post-cure period in post-cure of the sizing agent.
Fig. 10 is a flowchart illustrating an example of a procedure for manufacturing a carbon fiber composite material using CNT-adhered carbon fibers recycled from a workpiece.
Fig. 11 is an SEM photograph illustrating a bent state of a material CNT used in Example.
Fig. 12 is a graph illustrating tensile strength of a test piece of Example 2.

Fig. 13 is a graph illustrating a maximum load of Example 2.
Fig. 14 is a graph illustrating displacement of the test piece at the maximum load of Example 2.
Fig. 15 is a graph illustrating tensile strength of a test piece of Example 3.
Fig. 16 is a graph illustrating displacement of the test piece at a maximum load of Example 3.
Fig. 17 is an SEM image illustrating a fracture surface of the test piece of Example 3.
Fig. 18 is an SEM image illustrating a fracture surface of a test piece of Comparative Example 2.
Fig. 19 is an FE-SEM image illustrating a state of a composite fiber after a matrix resin of a test piece is removed by combustion.

## Description of Embodiments

### [Molded Article]

As shown in Fig. 1, a molded article 10 has composite fibers 11 embedded as reinforcing fibers in a matrix resin M formed of a thermoplastic resin. The molded article 10 is an injection molded article manufactured by injection molding. In Fig. 1, although the molded article 10 is illustrated as having a rectangular parallelepiped shape for convenience, the molded article 10 may have any shape.

The matrix resin M is not limited as long as the matrix resin M is a known thermoplastic resin that can be injection molded. The thermoplastic resin may contain additives. Examples of the thermoplastic resin include general-purpose resins such as polyolefins (polyethylene, polypropylene, etc.), polyvinyl chloride, polystyrene, an acrylonitrile/styrene (AS) resin, an acrylonitrile/butadiene/styrene (ABS) resin, a methacrylic resin (PMMA, etc.), and a thermoplastic epoxy resin, engineering plastics such as polyamide, polyacetal, polyesters (polyethylene terephthalate, etc.), ultrahigh molecular weight polyethylene, polycarbonate, and a phenoxy resin, and super engineering plastics such as polyphenylene sulfide, polyether ether ketone, polyether ketone ketone, liquid crystal polymer, polytetrafluoroethylene, polyetherimide, polyarylate, and polyimide.

### [Composite Fibers]

Fig. 2 illustrates a composite fiber bundle 12 used for manufacturing the molded article 10 described above. The composite fiber bundle 12 is a bundle of a plurality of composite fibers 11. Each of the composite fibers 11 includes a carbon fiber 13 and a structure 14 formed on a surface thereof, and a sizing agent 15 (see Fig. 3) is applied to the structure 14. In the structure 14, a plurality of carbon nanotubes (hereinafter, referred to as "CNTs") 17 are entangled.

The composite fiber bundle 12 is constituted by, for example, 12,000 composite fibers 11. The number of the composite fibers 11 which constitute the composite fiber bundle 12 is not particularly limited, and may be set, for example, within a range of 10,000 or more and 100,000 or less. In Fig. 1, several composite fibers 11 are drawn for convenience of illustration.

In a carbon fiber bundle in which the carbon fibers 13 as raw fibers used for manufacturing the composite fibers 11 are collected, it is preferable that the carbon fibers 13 are not substantially entangled with each other, or are less entangled with each other. In such a carbon fiber bundle, it is easy to uniformly spread the carbon fibers 13 and cause the CNTs 17 to uniformly adhere to each of the carbon fibers 13. As the carbon fibers 13, a PAN-based or pitch-based fiber obtained by baking an organic fiber such as polyacrylic nitrile, rayon, and pitch which are derived from petroleum, coal, and coal tar, a fiber obtained by baking an organic fiber derived from wood or a plant fiber, and the like can be used without particular limitation, and the carbon fibers 13 may be commercially available carbon fibers. In addition, with regard to a diameter and a length of the carbon fibers 13, there is no particular limitation. As the carbon fibers 13, a fiber having a diameter in a range of approximately 5 $\mu$m or more and 20 $\mu$m or less can be preferably used, and a fiber having a diameter in a range of approximately 5 $\mu$m or more and 10 $\mu$m or less can be more preferably used. As the carbon fibers 13, a long fiber can be preferably used, and a length thereof is preferably 50 m or more, more preferably in a range of 100 m or more and 100,000 m or less, and still more preferably in a range of 100 m or more and 10,000 m or less. The carbon fibers 13 may be cut short in the molded article 10.

As the CNTs 17 constituting the structure 14, CNTs having a bent shape as described later are used. Accordingly, in comparison to a case of using CNTs with high linearity, the number of CNTs 17 adhered to the carbon fibers 13 further increases, a thickness of the structure 14 is larger, and the structure 14 has a configuration in which the CNTs 17 are knitted like a non-woven fabric fiber.

The CNTs 17 which constitute the structure 14 are uniformly dispersed and entangled across substantially the entire surface of each of the carbon fibers 13, and form a network structure in which the plurality of CNTs 17 are connected in a state of being entangled with each other. The connection stated here includes physical connection (simple contact) and chemical connection. The CNTs 17 come into direct contact with each other without intervening materials such as a dispersing agent including a surfactant, and adhesive therebetween.

Some of the CNTs 17 which constitute the structure 14 directly adhere and are fixed to the surfaces of the carbon fibers 13. Accordingly, the structure 14 directly adheres to the surfaces of the carbon fibers 13. A structure in which the CNTs 17 directly adhere to the surfaces of the carbon fibers 13 represents that the CNTs 17 directly adhere to the carbon fibers 13 in a state in which a dispersing agent such as a surfactant, adhesive, or the like is not interposed between the CNTs 17 and the surfaces of the carbon fibers 13, and adhesion (fixing) is obtained due to bonding by Van der Waals force. Since some of the CNTs 17 which constitute the structure 14 directly adhere to the surfaces of the carbon fibers 13, it enters a direct contact state in which the structure 14 comes into direct contact with the surfaces of the carbon fibers 13 without interposing the dispersing agent, the adhesive, or the like.

In addition, some of the CNTs 17 which constitute the structure 14 are entangled with other CNTs 17 and are fixed to the carbon fibers 13 without direct contact with the surfaces of the carbon fibers 13. Further, some of the CNTs 17 directly adhere to the surfaces of the carbon fibers 13 and are entangled with other CNTs 17 to be fixed to the carbon fibers 13. In the following description, fixing of the CNTs 17 to the carbon fibers 13 is collectively referred to as adhesion to the carbon fibers 13. A state in which the CNTs 17 are entangled or intertwined includes a state in which some of the CNTs 17 are pressed against other CNTs 17.

In addition to direct adhesion with the surfaces of the carbon fibers 13 as described above, some of the CNTs 17 which constitute the structure 14 are not in direct contact with the surfaces of the carbon fibers 13 but are fixed to the carbon fibers 13 by entanglement with other CNTs 17, or the like. Accordingly, the structure 14 includes more CNTs 17 than a structure in which the CNTs directly adhere to surfaces of carbon fibers as in a structure of composite fibers of the related art. That is, the number of the CNTs 17 which adhere to the carbon fibers 13 further increases in comparison to the related art.

As described above, since the CNTs 17 adhere to the surfaces of the carbon fibers 13 without intervening materials, the CNTs 17 constituting the structure 14 are unlikely to be peeled off from the surfaces of the carbon fibers 13. In the molded article 10, since the CNTs 17 enter gaps of the intricately entangled structure 14 and the matrix resin M is cured, the composite fibers 11 and the matrix resin M are firmly bonded by the anchor effect (mechanical bonding). The gaps of the structure 14 are openings exposed on a surface thereof and hollow spaces formed inside the structure 14. In addition, the structure 14 has a large thickness and has a structure in which the CNTs 17 are knitted like a non-woven fabric, and the elastic modulus of a composite region in which the matrix resin M enters the structure 14 and is cured is higher than that of the matrix resin M and lower than that of the carbon fibers 13. Due to such a variation in the elastic modulus, stress concentration around the carbon fibers 13 is reduced. Due to the anchor effect and the reduction of the stress concentration as described above, the carbon fibers 13 or the composite fibers 11 are unlikely to peel off from the matrix resin M, and as a result, mechanical strength such as tensile strength of the molded article 10 is improved.

Examples of properties of the molded article 10 which are improved by the CNT 17 adhering to the surfaces of the carbon fibers 13 and forming the structure 14 having a large thickness and a non-woven fabric shape include elastic modulus, vibration damping properties (damping properties), durability against repetitive bending, and the like in addition to the tensile strength.

The structures 14 of the composite fibers 11 of the composite fiber bundle 12 are independent of each other, and the structure 14 of one of the composite fibers 11 does not share the same CNTs 17 with the structure 14 of another composite fiber 11. That is, the CNTs 17 contained in the structure 14 provided in one of the carbon fibers 13 is not contained in the structure 14 provided in another carbon fiber 13.

As illustrated in Fig. 3, the sizing agent 15 is applied to the CNTs 17 in a state of wrapping and covering a contact portion where the CNTs 17 are in direct contact with each other. The sizing agent 15 includes a carbodiimide-derived structure formed by a reaction between a functional group existing on surfaces of the CNTs 17, for example, a hydrophilic group such as a hydroxyl group (-OH) and a carboxyl group (-COOH) and a carbodiimide group (-N = C = N-) of a carbodiimide compound. That is, the sizing agent 15 cross-links the CNTs 17 that are in direct contact with each other via the carbodiimide-derived structure. Accordingly, the CNTs 17 are fixed by the contact portion where the CNTs 17 are in direct contact with each other, and the sizing agent 15. As illustrated in Fig. 4, the direct contact of the CNTs 17 at the contact portion is maintained, and the CNTs 17 are cross-linked by the sizing agent 15 around the contact portion where surfaces of the CNTs 17 are close to each other.

A method for applying the functional group on the surfaces of the CNTs 17 is not particularly limited, and the functional group may be applied as a result of various treatments performed after manufacturing the CNTs 17, or may be applied by a functional group application treatment. As the functional group application treatment, for example, a wet anodic electrolytic oxidation method, an ozone oxidation method, and the like can be used. When a functional group exists on the surfaces of the CNTs 17 at the time of a sizing treatment of applying the sizing agent 15 to the structure 14, the timing of applying the functional group to the surfaces of the CNTs 17 is not particularly limited.

The carbodiimide compound is a compound including two or more structures shown in Formula (1) in which n is an integer of one or greater. For example, R is a hydrocarbon. Examples of the hydrocarbon include aliphatic hydrocarbons, alicyclic hydrocarbons, and aromatic hydrocarbons.

[Chemical Formula 1]

$$-(N=C=N-R)_n- \quad ...(1)$$

As the carbodiimide compound, for example, as described in JP-A-2007-238753 or the like, a compound that is used as a curing agent for an aqueous resin or the like can be used, and a commercially available compound may be used. Examples of the commercially available carbodiimide compound include "Carbodilite V-02" (trade name, manufactured by Nisshinbo Chemical Inc.). The carbodiimide compound including a hydrophilic segment is dissolved in water, and functions as an aqueous cross-linking agent that cross-links the CNTs 17.

As described above, the sizing agent 15 acts as a cross-linking agent and cross-links the CNTs 17 which constitute the structure 14 and are in contact with each other. Accordingly, the adhesion state of the CNTs 17 becomes stronger, and the structure 14 is unlikely to collapse.

In addition, as illustrated in Fig. 3, the sizing agent 15 adheres to the carbon fibers 13 and the CNTs 17 in a state of wrapping and covering the contact portion between the carbon fibers 13 and the CNTs 17 that are in direct contact with the carbon fibers 13. As in the case of the CNTs 17, the sizing agent 15 cross-links the carbon fibers and the CNTs 17 via the carbodiimide-derived structure formed by a reaction between the carbodiimide group and the functional group on the surfaces of the carbon fibers 13 and the CNTs 17. As described above, the sizing agent 15 cross-links the carbon fibers and the CNTs 17. Accordingly, the adhesion state of the CNTs 17 to the carbon fibers 13 becomes stronger, and the structure 14 is unlikely to peel off from the carbon fibers 13.

The sizing agent 15 described above effectively suppresses peeling or detachment of the structure 14 from the carbon fibers 13 and entire or partial collapse of the structure 14 during kneading of a thermoplastic resin that is mixed with the composite fibers 11 to form the matrix resin M in an injection molding machine. Accordingly, the interface adhesion strength between the carbon fibers 13 or the composite fibers 11 and the matrix resin M is reliably improved, the mechanical strength of the molded article 10 is reliably improved, and more uniform preferable properties are obtained.

When the direct contact of the CNTs 17 is maintained, and the CNTs 17 are cross-linked around the contact portion where the CNTs 17 are in direct contact with each other by the sizing agent 15, the CNTs 17 may be wrapped and covered with the sizing agent 15 as described above, or may not be wrapped and covered as illustrated in Figs. 5 and 6. Similarly, as long as the direct contact between the carbon fibers 13 and the CNTs 17 is maintained and the carbon fibers 13 and the CNTs 17 are cross-linked by the sizing agent 15 around the contact portion where the carbon fibers 13 and the CNTs 17 are in direct contact with each other, the sizing agent 15 may not wrap and cover the CNTs 17 as illustrated in Fig. 5.

Although the sizing agent 15 in this example has a carbodiimide-derived structure as described above, the sizing agent 15 is not particularly limited as long as the sizing agent 15 cross-links the carbon nanotubes in direct contact with each other via a structure formed by a reaction between a functional group on the surfaces of the CNTs 17 and a functional group of a raw material (compound) serving as a sizing agent. For example, it is also preferable to use a sizing agent having an isocyanate-derived structure formed by a reaction between a functional group on the surfaces of the CNTs 17 and an isocyanate group of an isocyanate compound having two or more isocyanate groups. The sizing agent 15 having a carbodiimide-derived structure as in this example is particularly preferable because the sizing agent 15 more strongly cross-links the CNTs 17 with each other and between the carbon fibers 13 and the CNTs 17.

In the structure 14, as described above, gaps 19 surrounded by the plurality of CNTs 17 are formed by the CNTs 17. It is preferable that the sizing agent 15 does not fill up the gaps 19 as much as possible so as not to prevent the matrix resin M from entering the structure 14. It is preferable that a sizing agent mass ratio Rm which is a ratio of the mass of the sizing agent 15 adhered to the structure 14 to the mass of the carbon fibers 13 is preferably set to a range of 0.6% or more and 1.1% or less so as not to fill up the gaps 19.

Depending on a size of the diameter of the carbon fibers 13, the mass of the carbon fibers 13 per unit length increases or decreases, and the mass of the sizing agent 15 suitable for adhesion to the structure 14 also increases or decreases. However, typically, in a range of the diameter of the carbon fibers 13 that are used in a molded article as reinforcing fibers, a variation of the sizing agent mass ratio Rm which is suitable for a variation of the diameter of the carbon fibers 13 is minute, and even in carbon fibers 13 having any diameter, filling of the gaps 19 can be prevented within the range of the sizing agent mass ratio Rm described above. For carbon fibers 13 having a diameter in a range of 4 μm or more and 8 μm or less, it is confirmed that the gaps 19 are not filled up when the sizing agent mass ratio Rm is 0.6% or more and 1.1% or less. It is confirmed that there is no problem even if some of the gaps 19 in the structure 14 are filled up, and that the composite fibers 11 can be used without problems as long as the sizing agent mass ratio Rm 3% or less.

The CNTs 17 adhered to the carbon fibers 13 have a bent shape. The bent shape of the CNTs 17 is obtained because a bent portion is provided due to existence of a five-membered ring, a seven-membered ring, and the like of carbon in a graphite structure of the CNTs 17. The bent shape is a shape from which the CNTs 17 can be evaluated to be curved, bent, or the like from observation with an SEM. For example, the bent shape of the CNTs 17 represents that the bent portion exists at least at one site or more per average length of a use range of the CNTs 17 to be described later. Even in a case where the CNTs 17 having such a bent shape are long, the CNTs 17 adhere to the surfaces of the carbon fibers 13, which are curved surfaces, in various postures. In addition, the CNTs 17 having the bent shape are likely to form a space (gap) between the surfaces of the carbon fibers 13 to which the CNTs 17 adhere, or between the adhered CNTs 17, and other CNTs 17 enter the space. Therefore, when using the CNTs 17 having the bent shape, the number of the CNTs 17 adhered to the carbon fibers 13 (the number of the CNTs 17 forming the structure 14) further increases in comparison to a case of using CNTs having a shape with high linearity.

A length of the CNTs 17 is preferably within a range of 0.1 μm or more and 10 μm or less. When the length is 0.1 μm or more, the CNTs 17 can more reliably form the structure 14 in which the CNTs 17 are entangled and come into direct contact with each other or are directly connected to each other, and it is possible to more reliably form the space which the other CNTs 17 enter as described above. In addition, when the length of the CNTs 17 is 10 μm or less, the CNTs 17 do not adhere between the carbon fibers 13. That is, as described above, a CNT 17 that is contained in the structure 14 provided in one carbon fiber 13 is not contained in the structure 14 provided in another carbon fiber 13.

The length of the CNTs 17 is more preferably within a range of 0.2 μm or more and 5 μm or less. When the length of the CNTs 17 is 0.2 μm or more, the number of the CNTs 17 adhered increases and the structure 14 can be made thick. When the length is 5 μm or less, when causing the CNTs 17 to adhere to the carbon fibers 13, the CNTs 17 are unlikely to aggregate, and the CNTs 17 are likely to be more evenly dispersed. As a result, the CNTs 17 more uniformly adhere to the carbon fibers 13.

As the CNTs adhered to the carbon fibers 13, a mixture of CNTs having high linearity and a mixture of CNTs having a length outside the length range as described above are not excluded. For example, even in a case where mixing-in occurs, since the CNTs with high linearity enter the space formed by the CNTs 17, it is possible to increase the number of the CNTs adhered to the carbon fibers 13.

It is preferable that an average diameter of the CNTs 17 is within a range of 0.5 nm or more and 30 nm or less, and more preferably a range of 3 nm or more and 10 nm or less. When the diameter is 30 nm or less, the CNTs 17 are very flexible and are likely to adhere to the carbon fibers 13 along the surfaces thereof, and are likely to be fixed to the carbon fibers 13 in a state of being entangled with other CNTs 17. In addition to this, formation of the structure 14 becomes more reliable. In addition, when the diameter is 10 nm or less, bonding between the CNTs 17 constituting the structure 14 becomes strong. The diameter of the CNTs 17 is set as a value measured using a transmission electron microscope (TEM) photograph. The CNTs 17 may be a single-layer structure or a multi-layer structure, but the multi-layer structure is preferable.

The number of the CNTs 17 adhered to the carbon fibers 13 can be evaluated with the thickness of the structure 14 (a length in a diameter direction of the carbon fibers 13). For example, the thickness of each portion of the structure 14 can be measured as follows. Specifically, a part of the structure 14 on the surfaces of the carbon fibers 13 is bonded to a cellophane tape or the like and is peeled off, and a cross section of the structure 14 remaining on the surfaces of the carbon fibers 13 is measured with an SEM or the like to acquire the thickness. In order to almost uniformly cover a measurement range of a predetermined length along a fiber axis direction of the carbon fibers 13, the thickness of the structure 14 is measured at ten sites in the measurement range, and an average of the measured values is set as the thickness of the structure 14. For example, the length of the measurement range is set to a length that is five times an upper limit of the ranges of the length of the CNTs 17 described above.

The thickness (average) of the structure 14 which is obtained as described above is preferably within a range of 10 nm or more and 300 nm or less, more preferably within a range of 15 nm or more and 200 nm or less, and still more preferably within a range of 50 nm or more and 200 nm or less. When the thickness of the structure 14 is 150 nm or less, an impregnation property with a resin between the carbon fibers 13 is satisfactory.

An adhesion state of the CNTs 17 to the carbon fibers 13 can be evaluated using a CNT mass ratio Rc which is a mass ratio of the CNTs 17 to the composite fibers 11. When the mass (hereinafter, referred to as "CF mass") of only the carbon fibers 13 having a predetermined length is set as Wa, and the mass (hereinafter, referred to as "CNT mass") of the CNTs 17 adhered to the carbon fibers 13 is set as Wb, the CNT mass ratio Rc is obtained as "$Rc = Wb/(Wa + Wb)$".

It is preferable that the CNTs 17 uniformly adhere to the carbon fibers 13, and it is preferable that the CNTs 17 adhere to the carbon fibers 13 to cover the surfaces thereof. The adhesion state including uniformity of the CNTs 17 to the carbon fibers 13 is observed with an SEM, and an obtained image can be visually evaluated. In this case, it is preferable to make an evaluation by observing a plurality of sites (for example, 10 sites) to almost evenly cover a range of a predetermined length (for example, a range of 1 cm, 10 cm, or 1 m) of the carbon fibers 13 along the fiber axis direction.

In addition, the uniformity of adhesion of the CNTs 17 to the carbon fibers 13 can be evaluated using the CNT mass ratio Rc described above. The CNT mass ratio Rc is preferably 0.001 or more and 0.008 or less. When the CNT mass

ratio Rc is 0.001 or more, the property improving effect due to the structure 14 as described above can be reliably obtained in the molded article 10. When the CNT mass ratio Rc is 0.008 or less, the thermoplastic resin forming the matrix resin M reliably enters the gaps 19 of the structure 14. The CNT mass ratio Rc is more preferably 0.002 or more and 0.006 or less. When the CNT mass ratio Rc is 0.002 or more, the structure 14 (CNTs 17) more reliably functions between almost all carbon fibers 13. When the CNT mass ratio Rc is 0.006 or less, the matrix resin M reliably enters the structure 14, and the structure 14 more reliably functions even in a case where a ratio of the matrix resin M in the molded article 10 is low. Further, even in a case where the ratio of the matrix resin M is low, the CNTs 17 exist in a resin between carbon fibers at a high concentration, and thus toughness strength of the molded article 10 can be improved due to a reinforcing effect of the CNTs 17.

It is preferable that a standard deviation s of respective CNT mass ratios Rc of ten measurement sites set within a range (hereinafter, referred to as "evaluation range") of 1 m in the length of one of the composite fibers 11 is 0.0005 or less, and more preferably 0.0002 or less. In addition, a ratio of the standard deviation s to an average of the CNT mass ratio Rc is preferably 40% or less, and more preferably 15% or less. It is preferable that the ten measurement sites are set to almost uniformly cover the evaluation range. The standard deviation s becomes an index of a variation in the number (adhesion amount) of the CNTs 17 adhered to the carbon fibers 13 and the thickness of the structure 14, and the smaller the variation is, the smaller a value of the standard deviation is. Therefore, as the standard deviation s is smaller, it is more preferable. The variation in the number of the CNTs 17 adhered and the thickness of the structure 14 is exhibited as a difference of properties derived from the CNTs 17 in the composite fibers 11 and the molded article 10 using the composite fibers 11. When the standard deviation s is 0.0005 or less, the properties derived from the CNTs 17 in the composite fibers 11 and the molded article 10 are more reliably exhibited, and when the standard deviation s is 0.0002 or less, the properties derived from the CNTs 17 are sufficiently and reliably exhibited. The standard deviation s is obtained by Formula (2). The value n in Formula (2) represents the number of measurement sites (n = 10 in this example), the value Ri represents the CNT mass ratio Rc of the measurement sites, and the value Ra represents an average of the CNT mass ratio Rc.

[Expression 1]

$$s=\sqrt{\frac{1}{n}\sum_{i=1}^{n}(Ri-Ra)^2} \quad \cdots (2)$$

[Measurement of CNT Mass Ratio]

The CNT mass ratio Rc is obtained as follows, using a composite fiber bundle 12 (for example, approximately 12,000 composite fibers 11) cut out to approximately 1 m at a measurement site where the CNT mass ratio Rc is desired to be obtained as a measurement sample.

(1) The measurement sample is put into a solution (hereinafter, referred to as "measurement solution") that serves as a dispersion medium of the CNTs 17. As the measurement solution, for example, a solution obtained by putting a dispersing agent into NMP (N-methyl-2-pyrrolidone, CAS registration number: 872-50-4) is used. The dispersing agent is added to the measurement solution in order for the CNTs 17 not to re-adhere to the carbon fibers 13, but may not be added. For example, the amount of the measurement solution is 100 ml with respect to 10 g of the measurement sample.
(2) A difference between the mass of the measurement solution before putting the measurement sample and the mass of the measurement solution including the measurement sample after being put is measured, and the difference is set as the mass of the measurement sample, that is, the sum (Wa + Wb) of the CF mass Wa of the carbon fibers 13 and the CNT mass Wb of the CNTs 17 adhered to the carbon fibers 13.
(3) The measurement solution including the measurement sample is heated to completely separate the CNTs 17 adhered to the carbon fibers 13 from the carbon fibers 13 and to disperse the CNTs 17 in the measurement solution.
(4) Absorbance (transmittance) of the measurement solution in which the CNTs 17 are dispersed is measured using an absorption photometer. The concentration of the CNTs 17 in the measurement solution (hereinafter, referred to as "CNT concentration") is obtained from a measurement result by the absorption photometer and a calibration curve created in advance. The CNT concentration is a mass percent concentration given as "C = W2/ (W1 + W2)" when a value of the CNT concentration is set as C, the mass of the measurement solution is set as W1, and the mass of the CNTs 17 included in the measurement solution is set as W2.
(5) The CNT mass Wb of the CNTs 17 in the measurement solution is obtained from the obtained CNT concentration and the mass of the measurement solution before putting the measurement sample.
(6) The CNT mass ratio Rc (= Wb/(Wa + Wb)) is calculated from the sum (Wa + Wb) of the CF mass Wa and the CNT

mass Wb which is obtained in (2), and the CNT mass (Wb) of the CNTs 17.

In the measurement of the absorbance described above, a spectrophotometer (for example, SolidSpec-3700 manufactured by SHIMADZU CORPORATION, or the like) can be used, and as a measurement wavelength, for example, 500 nm or the like may be used. In addition, in the measurement, the measurement solution is preferably accommodated in a quartz cell. In addition, absorbance of a dispersion medium that does not contain impurities other than the dispersing agent may be measured as a reference, and the concentration C of the CNTs 17 can be obtained using a difference between the absorbance of the measurement solution in which the CNTs 17 are dispersed and the reference. In the measurement of the CNT mass ratio Rc, a composite fiber bundle obtained by removing the sizing agent 15 from the composite fiber bundle 12 is used. However, in a case where the mass of the sizing agent 15 to the mass of the carbon fibers 13 is approximately 1/100, presence or absence of adhesion of the sizing agent 15, that is, the mass of the sizing agent 15 substantially has no influence on a preferable range of the CNT mass ratio Rc. Accordingly, the mass of the composite fibers 11 to which the sizing agent 15 adheres can be regarded as the sum (Wa + Wb) of the CF mass Wa and the CNT mass Wb.

In a case of evaluating the uniformity using the CNT mass ratio Rc, ten measurement sites are set to almost uniformly cover an evaluation range (for example, a length of 1 m) of the composite fiber bundle 12 to be evaluated. With regard to the ten measurement sites, both ends of the evaluation range and eight sites between the ends are set, and the CNT mass ratio Rc is obtained with respect to each of the measurement sites in the procedure described above.

[Measurement of Sizing Agent Mass Ratio]

In measurement of the sizing agent mass ratio Rm, for example, three composite fibers 11 are cut out from the composite fiber bundle 12 prepared by causing the sizing agent 15 to adhere to the structure 14 of each of the composite fibers 11 and are set as a measurement sample. The sizing agent mass ratio Rm is obtained as follows. For example, a length of the composite fibers 11 cut out as a measurement sample is set to 5 m. The number and the length of the composite fibers 11 set as the measurement sample are not limited thereto.

(1) The measurement sample is put into a measurement solution of the CNTs 17. Conditions of the measurement solution and the dispersion medium are the same as in the measurement of the CNT mass ratio Rc described above.
(2) A difference between the mass of the measurement solution before putting the measurement sample, and the mass of the measurement solution including the measurement sample after being put is measured, the difference is set as the mass of the measurement sample, that is, the sum (Wa + Wb + Wc) of the CF mass Wa of the carbon fibers 13, the CNT mass Wb of the CNTs 17 adhered to the carbon fibers 13, and a sizing agent mass Wc of the sizing agent 15 adhered to the CNTs 17.
(3) The measurement solution including the measurement sample is heated to completely separate the CNTs 17 adhered to the carbon fibers 13 from the carbon fibers 13 and to disperse the CNTs 17 in the measurement solution.
(4) Absorbance of the measurement solution in which the CNTs 17 are dispersed is measured using an absorption photometer in a similar manner as in the case of measuring the CNT mass ratio Rc. A CNT concentration of the CNTs 17 in the measurement solution is obtained from the absorbance and a calibration curve created in advance. The CNT mass Wb in the measurement solution is obtained from the obtained CNT concentration and the mass of the measurement solution before putting the measurement sample.
(5) The CF mass Wa is specified from a catalog value of the carbon fibers 13 (raw fiber) which are used.
(6) A difference is obtained by subtracting the CF mass Wa obtained in (5) and the CNT mass Wb obtained in (4) from the mass (Wa + Wb + Wc) of the measurement sample, and the difference is set as the sizing agent mass Wc of the sizing agent 15 applied to the measurement sample.
(7) The sizing agent mass ratio Rm (= (Wc/Wa) $\times$ 100%) is calculated from the CF mass Wa obtained in (5) and the sizing agent mass Wc obtained in (6).

In the measurement of the sizing agent mass ratio Rm described above, in a case of specifying the CF mass Wa from the catalog value of the carbon fibers 13 (raw fiber), the mass of the carbon fibers 13 (raw fiber) to which a sizing agent for preventing entanglement does not adhere is specified. The sizing agent for preventing entanglement stated here is a sizing agent that adheres to the surfaces of the carbon fibers 13 (raw fiber) for preventing entanglement or the like between the carbon fibers 13 (raw fiber), and is different from the sizing agent 15. However, the mass of the sizing agent for preventing entanglement is typically approximately 1/100 of the CF mass Wa of the carbon fibers 13, and in this case, presence or absence of adhesion of the sizing agent for preventing entanglement substantially does not have an influence on a preferable range of the sizing agent mass ratio Rm. Therefore, in this case, the mass of the carbon fibers 13 to which the sizing agent for preventing entanglement adheres can be regarded as the CF mass Wa when obtaining the sizing agent

mass ratio Rm.

In addition, the CF mass Wa is not limited to being specified from the catalog value. For example, the mass of the carbon fibers 13 after separation of the CNTs 17 may be measured and set as the CF mass Wa. Further, the CF mass Wa may be specified by measuring the mass of a carbon fiber which is the same kind as the carbon fibers 13 used in the composite fibers 11 set as the measurement sample and to which the CNTs 17 do not adhere.

[Method for Manufacturing Molded Article]

In Fig. 7, the molded article 10 is manufactured through a structure forming step ST1, a sizing treatment step ST2, a post-cure step ST3, and an injection molding step ST4. The injection molding step ST4 includes a kneading step ST4a and an injection step ST4b.

In the structure forming step ST1, the CNTs 17 are caused to adhere to each of the carbon fibers 13 (raw fiber) of a carbon fiber bundle, thereby forming the structure 14. In order to form the structure 14, the carbon fiber bundle is immersed in a CNT isolated dispersion (hereinafter, simply referred to as "dispersion") in which the CNTs 17 are isolated and dispersed, and mechanical energy is applied to the dispersion. The term "isolated and dispersed" represents a state in which the CNTs 17 are physically separated one by one and are dispersed in a dispersion medium without entanglement, and a state in which a ratio of an aggregate in which two or more CNTs 17 are aggregated in a bundle form is 10% or less. Here, when the ratio of the aggregate is 10% or more, aggregation of the CNTs 17 in the dispersion medium is promoted, and adhesion of the CNTs 17 to the carbon fibers 13 is inhibited.

As illustrated in Fig. 8, an adhesion device 21 used in the structure forming step ST1 includes a CNT adhesion tank 22, guide rollers 23 to 26, an ultrasonic generator 27, and the like. A dispersion 28 is stored in the CNT adhesion tank 22. The ultrasonic generator 27 applies ultrasonic waves to the dispersion 28 in the CNT adhesion tank 22 from a lower side of the CNT adhesion tank 22.

A carbon fiber bundle 29 having a long length (for example, approximately 100 m) in which the structure 14 is not formed is continuously fed to the adhesion device 21. The carbon fiber bundle 29 that is fed is wound around the guide rollers 23 to 26 in this order, and travels at a constant speed by a traveling mechanism (not illustrated). The carbon fiber bundle 29 in which a sizing agent for preventing entanglement does not adhere to the carbon fibers 13 is fed to the adhesion device 21.

The carbon fiber bundle 29 is wound around the guide rollers 23 to 26 in a spread state. Appropriate tension acts on the carbon fiber bundle 29 wound around the guide rollers 23 to 26, and thus the carbon fibers 13 are unlikely to be entangled with each other. It is preferable that the winding of the carbon fiber bundle 29 around the guide rollers 23 to 26 is set to a smaller winding angle (90° or less).

Any of the guide rollers 23 to 26 is a flat roller. A roller length (a length in an axial direction) of the guide roller 23 is set to be sufficiently larger than a width of the carbon fiber bundle 29 that is spread. With regard to the guide rollers 24 to 26, as in the guide roller 23, the roller length is set to be sufficiently larger than the width of the spread carbon fiber bundle 29. For example, the guide rollers 23 to 26 have the same size, the roller length is set to 100 mm, and a diameter (external diameter) of the rollers is set to 50 mm. In the spread carbon fiber bundle 29, a plurality of the carbon fibers 13 are aligned in a thickness direction (a diameter direction of the guide rollers).

Among the guide rollers 23 to 26, the guide rollers 24 and 25 are disposed in the CNT adhesion tank 22. Accordingly, the carbon fiber bundle 29 linearly travels between the guide rollers 24 and 25 in the dispersion 28 at a constant depth. A traveling speed of the carbon fiber bundle 29 is preferably set within a range of 0.5 m/minute or more and 100 m/minute or less. The higher the traveling speed of the carbon fiber bundle 29 is, the further productivity is improved. The lower the traveling speed is, the more effective for uniform adhesion of the CNTs 17, and more effective for suppression of entanglement of the carbon fibers 13. In addition, the less entanglement between the carbon fibers 13 is, the further uniformity of adhesion of the CNTs 17 to the carbon fibers 13 is improved. When the traveling speed of the carbon fiber bundle 29 is 100 m/minute or less, entanglement between the carbon fibers 13 is more effectively suppressed, and the uniformity of adhesion of the CNTs 17 can be further improved. In addition, the traveling speed of the carbon fiber bundle 29 is more preferably set within a range of 5 m/minute or more and 50 m/minute or less.

The ultrasonic generator 27 applies ultrasonic vibration as mechanical energy to the dispersion 28. Accordingly, in the dispersion 28, a reversible reaction state is created in which a dispersion state in which the CNTs 17 are dispersed and an aggregation state in which the CNTs 17 are aggregated vary alternately. In a case where the carbon fiber bundle 29 is caused to pass through the dispersion 28 that is in the reversible reaction state, when transitioning from the dispersion state to the aggregation state, the CNTs 17 adhere to the carbon fibers 13 due to Van der Waals force. The mass of the carbon fibers 13 is as large as 100,000 times or more the mass of the CNTs 17, and the energy necessary for detachment of the adhered CNTs 17 is more than the energy due to the ultrasonic vibration. Therefore, the CNTs 17 adhered once to the carbon fibers 13 in the dispersion 28 are not peeled off from the carbon fibers 13 by the ultrasonic vibration after adhesion. Since the mass is very small, the dispersion state and the aggregation state alternately vary between the CNTs 17 due to the ultrasonic vibration.

When transition from the dispersion state to the aggregation state is repetitively performed, a large number of CNTs 17 adhere to each of the carbon fibers 13, and the structure 14 is formed. As described above, when using the CNTs 17 having a bent shape, other CNTs 17 enter a space formed between the CNTs 17 and the surfaces of the carbon fibers 13 to which the CNTs 17 adhere, between the adhered CNTs 17, or the like, and thus more CNTs 17 adhere to the carbon fibers 13 and the structure 14 is formed.

A frequency of the ultrasonic vibration applied to the dispersion 28 is preferably 40 kHz or more and 950 kHz or less. When the frequency is 40 kHz or more, entanglement between the carbon fibers 13 in the carbon fiber bundle 29 is suppressed. In addition, when the frequency is 100 kHz or more, cavitation of the dispersion 28 is suppressed, and thus collision damage between carbon fibers can be suppressed. When the frequency is 950 kHz or less, the CNTs 17 adhere to the carbon fibers 13 in a satisfactory manner. In order to further reduce mechanical damage and entanglement of the carbon fibers 13, the frequency of the ultrasonic vibration is preferably 100 kHz or more.

In addition, the present inventors found that with regard to the number of the CNTs 17 adhered to the carbon fibers 13, when the number of times of transition from the dispersion state to the aggregation state in the CNTs 17 reaches 100,000 or more times, entanglement of the carbon fibers 13 is satisfactorily suppressed, and uniformity of the thickness of the structure 14 can be secured. A maximum value of the number of the CNTs 17 adhered varies in accordance with a CNT concentration in the dispersion 28, and increases as the CNT concentration in the dispersion 28 is higher. However, when the CNT concentration in the dispersion 28 becomes a high concentration at which the CNTs 17 cannot take a dispersion state when applying the ultrasonic vibration, adhesion of the CNTs 17 to the carbon fibers 13 cannot be performed.

Therefore, it is preferable to determine the traveling speed of the carbon fiber bundle 29, a distance along which the carbon fiber bundle 29 travels in the dispersion 28 (an interval between the guide rollers 24 and 25), and the frequency of the ultrasonic vibration applied to the dispersion 28 such that the length of a period during which the carbon fiber bundle 29 is traveling in the dispersion 28, that is, the time (hereinafter, referred to as "immersion time") for which the carbon fiber bundle 29 is traveling between the guide rollers 24 and 25 becomes 100,000 times or more a cycle of the ultrasonic vibration applied to the dispersion 28. That is, it is preferable to satisfy "$Ts \geq 100{,}000/fs$", where fs (Hz) represents the frequency of the ultrasonic vibration, and Ts (second) represents the immersion time. For example, when the frequency of the ultrasonic vibration is 100 kHz and the distance along which the carbon fiber bundle 29 travels in the dispersion 28 is 0.1 m, the traveling speed of the carbon fiber bundle 29 can be set to 6 m/minute or less. In addition, even in a case where the carbon fiber bundle 29 is immersed in the dispersion 28 in a plurality of times in a division manner, when total immersion time is set to 100,000 times or more the cycle of the ultrasonic vibration, the number of the CNTs 17 adhered can be almost the maximum.

A standing wave in which a distribution of a sound pressure (amplitude) is determined occurs in the dispersion 28 inside the CNT adhesion tank 22 due to the ultrasonic vibration applied from the ultrasonic generator 27. In the adhesion device 21, positions of the guide rollers 24 and 25 in a depth direction are adjusted such that the carbon fiber bundle 29 travels in the dispersion 28 at a depth at which a standing wave node of the ultrasonic vibration, that is, a sound pressure becomes the minimum. Therefore, a depth from a liquid surface of the dispersion 28 at which the carbon fiber bundle 29 travels in the dispersion 28 is set as $D_p$, a wavelength of a standing wave of ultrasonic vibration that occurs in the dispersion 28 is set as $\lambda$, n is set as an integer of 1 or more, and these values are determined to satisfy a relationship of "$D_p = n\cdot(\lambda/2)$". The wavelength $\lambda$ of the standing wave can be obtained on the basis of a sound speed in the dispersion 28 and a frequency of the ultrasonic vibration applied from the ultrasonic generator 27.

As described above, through adjustment of the depth at which the carbon fiber bundle 29 travels in the dispersion 28, vibration of the carbon fibers 13 due to the sound pressure is suppressed, thread disorder due to thread sagging can be prevented, scraping between the carbon fibers 13 or between the CNTs 17 adhered to the surfaces of the carbon fibers 13 can be suppressed, and the structure 14 having a large thickness can be formed. In addition, since scraping can be suppressed, even when the thickness of the structure 14 is large, a variation in the CNT mass ratio Rc can be suppressed, and the standard deviation s described above decreases. The depth at which the carbon fiber bundle 29 travels in the dispersion 28 may slightly deviate from the standing wave node, and in this case, the depth is preferably set within a range of $n\cdot\lambda/2 - \lambda/8$ or more and $n\cdot\lambda/2 + \lambda/8$ or less ($n\cdot\lambda/2 - \lambda/8 \leq D_p \leq n\cdot\lambda/2 + \lambda/8$). Accordingly, it is possible to set the thread disorder of the carbon fibers 13 due to thread sagging in a permissible range.

For example, the dispersion 28 is prepared as follows. A long CNT (hereinafter, referred to as "material CNT") is added to a dispersion medium, the material CNT is cut by a homogenizer, a shear force, an ultrasonic disperser, or the like to obtain the CNTs 17 having a desired length, and to realize dispersion uniformity of the CNTs 17.

As the dispersion medium, water, alcohols such as ethanol, methanol and isopropyl alcohol, organic solvents such as toluene, acetone, tetrahydrofuran (THF), methyl ethyl ketone (MEK), hexane, normal hexane, ethyl ether, xylene, methyl acetate, and ethyl acetate, and a mixed solution containing these materials in any ratios can be used. The dispersion 28 does not contain a dispersing agent or an adhesive.

A material CNT that becomes a source of the CNTs 17 having a bent shape as described above also has a bent shape. In the material CNT, it is preferable that diameters of individual material CNTs are arranged. With regard to the material CNT, even when a length of each CNT generated from cutting is long, it is preferable that the CNT can be isolated

and dispersed. Accordingly, the dispersion 28 in which the CNTs 17 satisfying the length condition described above are isolated and dispersed is easily obtained.

In the composite fibers 11 in this example, as described above, since CNTs having a bent shape are caused to adhere as the CNTs 17, other CNTs 17 enter a space formed between the CNTs 17 and the surfaces of the carbon fibers 13 to which the CNTs 17 adhere, between the adhered CNTs 17, or the like. Accordingly, more CNTs 17 adhere to the carbon fibers 13. In addition, the CNTs 17 strongly adhere to the carbon fibers 13 and the structure 14 is formed, and thus the CNTs 17 are unlikely to be peeled off from the carbon fibers 13. In the molded article 10 manufactured using such composite fibers 11, the properties derived from the CNTs 17 are further enhanced.

A concentration of the CNTs 17 in the dispersion 28 is preferably in a range of 0.003 wt% or more and 3 wt% or less. The concentration of the CNTs 17 in the dispersion 28 is more preferably 0.005 wt% or more and 0.5 wt% or less.

In the structure forming step ST1, the dispersion medium adhered to the carbon fiber bundle 29 pulled out from the dispersion liquid 28 is evaporated and dried. After the structure forming step ST1, the dried carbon fiber bundle 29 is subjected to the sizing treatment step ST2.

In the sizing treatment step ST2, a sizing treatment of applying the sizing agent 15 to the structures 14 is performed. The sizing treatment includes an application treatment of applying a sizing treatment solution to (bringing a sizing treatment solution into contact with) the carbon fiber bundle 29 on which the structure 14 is formed, and a drying treatment of drying the sizing treatment solution. The sizing treatment solution can be prepared by dissolving a raw material (compound), in this example, the carbodiimide compound described above in a solvent. The solvent used for dissolution can be appropriately selected. For example, as the solvent that dissolves the carbodiimide compound, water, alcohol, ketones and a mixture thereof can be used.

In the application of the sizing treatment solution, any method such as a method of immersing the carbon fiber bundle 29 in a liquid tank accommodating the sizing treatment solution, a method of spraying the sizing treatment solution to the carbon fiber bundle 29, and a method of coating the sizing treatment solution to the carbon fiber bundle 29 may be used. The sizing treatment solution enters a state of being applied to the surfaces of the CNTs 17 in a state of maintaining direct contact between the CNTs 17. The lower the viscosity of the sizing treatment solution, the easier it is to aggregate in the vicinity of a contact portion between the CNTs 17 and in the vicinity of a contact portion between the carbon fibers 13 and the CNTs 17.

In the sizing treatment step ST2, it is possible to set a desired sizing agent mass ratio Rm by adjusting the amount of the sizing treatment solution applied to the carbon fiber bundle 29, a concentration of a raw material of a sizing agent in the sizing treatment solution, and the like.

In the drying treatment after the application treatment of the sizing treatment solution, the solvent (water in this example) of the sizing treatment solution is evaporated to form the sizing agent 15 that cross-links the CNTs 17 around contact portions thereof, and the CNTs 17 and the carbon fibers 13 around contact portions thereof. Accordingly, a composite fiber bundle 12 including a plurality of composite fibers 11 is obtained. As a drying method, a known method such as a method in which the carbon fiber bundle 29 to which the sizing treatment solution is applied is left and dried, a method of blowing a gas such as the air to the carbon fiber bundle 29, and a method of heating the carbon fiber bundle 29 can be used, and heating may be used in combination with any of the method of drying the carbon fiber bundle 29 while being left and the method of blowing a gas to the carbon fiber bundle 29.

In the post-cure step ST3 subsequent to the sizing treatment step ST2, curing of the sizing agent 15 is advanced, and post-cure for improving the strength of the sizing agent 15 is performed. This more effectively suppresses the structure 14 from collapsing and peeling off from the carbon fibers 13 when the molded article 10 is manufactured. The post-cure in the post-cure step ST3 does not necessarily require active heating, and the sizing agent 15 may be cured at room temperature, for example.

In this example, in the post-cure step ST3, the composite fiber bundle 12 subjected to the sizing treatment step ST2 is set to a predetermined post-cure temperature, and the post-cure is performed by maintaining the post-cure temperature for a post-cure period corresponding to the post-cure temperature. For example, the post-cure is performed by placing the composite fiber bundle 12 in an atmosphere at a post-cure temperature. Although the post-cure temperature and the post-cure period can be freely set as long as the substances constituting the composite fiber 11 are not deteriorated, the post-cure period is preferably set to be longer as the post-cure temperature is lower according to the Arrhenius equation. In this example, the post-cure temperature is maintained constant. For example, when the post-cure temperature is 70°C, the post-cure period is set to 0.5 days (12 hours), and when the post-cure temperature is 20°C, which is a lower temperature, the post-cure period is set to a longer period of 16 days (384 hours).

Here, when the post-cure temperature is set as T (°C) and the post-cure period is set as D (days), it is confirmed that collapse of the structure 14 and peeling from the carbon fibers 13 are preferably suppressed if the post-cure is performed so as to satisfy "$T \geq 14.43 \ln(D) + 60$". That is, in the graph illustrated in Fig. 9, it is preferable to determine the post-cure temperature and the post-cure period such that the post-cure temperature and the post-cure period are on a curve of the equation "$T = 14.43 \ln(D) + 60$" indicated by a symbol Eq and are within an area indicated by hatching above the curve Eq. Although Fig. 9 illustrates a range of the post-cure temperature from 0°C to 80°C, the range of the post-cure

temperature is not limited thereto. In addition, in a case where a sizing agent is applied using a compound other than the carbodiimide compound as described above, it is preferable to perform the post-cure, and in this case, it is preferable to satisfy the relationship between the post-cure temperature T and the post-cure period D as described above.

In a case where the post-cure is performed in the minimum post-cure period for one post-cure temperature, the relationship of "T = 14.43 ln(D) + 60" may be satisfied. In this case, for example, when the post-cure temperature is 70°C, 60°C, 50°C, 40°C, 30°C, 20°C, 10°C, and 0°C, the post-cure period may be 0.5 days, 1 day, 2 days, 4 days, 8 days, 16 days, 32 days, and 64 days in this order.

In the post-cure, if the post-cure temperature is changed a lower temperature during the post cure, the post-cure period can be set to be longer accordingly, and if the post-cure temperature is changed to a higher temperature during the post cure, the post-cure period can be shortened accordingly.

In the injection molding step ST4, the molded article 10 is manufactured by injection molding using the composite fiber bundle 12 subjected to the post-cure step ST3. The injection molding step ST4 includes the kneading step ST4a and the injection step ST4b as described above. In the kneading step ST4a, a molten thermoplastic resin (hereinafter, referred to as a molten resin) and the composite fibers 11 are kneaded, and the composite fibers 11 are dispersed and contained in the molten resin. In the injection step ST4b, the molded article 10 is injection molded by injecting, into a mold, the molten resin containing the composite fibers 11 generated in the kneading step ST4a.

To manufacture the molded article 10, an injection molding machine including an injection device, a mold clamping device, and the like is used. The injection device injects, into a mold, a molten resin obtained by heating and melting a thermoplastic resin that forms the matrix resin M, and the mold clamping device opens and closes the mold and holds the mold in a closed state against a pressure of the molten resin injected into the mold.

In this example, a screw pre-plasticizing type injection molding machine in which an injection device includes a plasticizing unit and an injection unit is used. In the plasticizing unit, a thermoplastic resin is heated and melted, and the molten resin and reinforcing fibers (the composite fibers 11 in this example) are kneaded in a plasticizing cylinder. In the injection unit, the molten resin containing the composite fibers 11 from the plasticizing unit is fed to an injection cylinder, and when a certain amount of the molten resin is fed, the molten resin in the injection cylinder is injected into a mold by a plunger, and the mold is filled with the molten resin containing the composite fibers 11. After a cooling step, the mold is opened and the molded article 10 is taken out. Therefore, the kneading step ST4a is performed using a plasticizing unit, and is performed using an injection unit, a mold, and a mold clamping device.

In addition, the injection molding device used in this example is of a long fiber thermoplastics-direct (LFT-D) type, and the composite fiber bundle 12 in a long shape is continuously fed to the plasticizing cylinder from a creel or the like. For example, the composite fiber bundle 12 is drawn into the plasticizing cylinder by rotation of a screw for kneading a molten resin. Each of the composite fibers 11 of the composite fiber bundle 12 is sheared to an appropriate length by being sandwiched between the flight of the screw and an inner surface of the cylinder and by a stress received from the molten resin being kneaded, and is dispersed in the molten resin by kneading. Kneading conditions such as a pressure and temperature in the plasticizing unit can be set as conditions suitable for a resin material used as the matrix resin M.

The molten resin during kneading in the plasticizing unit has a high degree of viscosity, and a large stress acts on the structure 14, which causes the structure 14 to peel off from the carbon fibers 13 or the structure 14 to collapse. However, in this example, since the CNTs 17 are firmly fixed to each other and the carbon fibers 13 and the CNTs 17 are firmly fixed to each other using the sizing agent 15 as described above, even when a large stress is applied during kneading, the structure 14 is unlikely to peel off or collapse. In addition, since the sizing agent 15 is applied to the structure 14, peeling or collapse of the structure 14 is less likely to occur, and further, since the strength of the sizing agent 15 is improved through the post-cure step ST3, peeling or collapse of the structure 14 is even less likely to occur.

The molded article 10 can also be manufactured by supplying the composite fibers 11 cut to an appropriate length in advance and pellets of a resin material, or pellets containing the composite fibers 11 cut to an appropriate length in a resin material, to the plasticizing cylinder, and in this case, the composite fibers 11 are also sheared within the plasticizing cylinder. On the other hand, from the viewpoint of improving the mechanical strength of the molded article 10, it is advantageous that the reinforcing fibers in the molded article 10 have a long shape. As in this example, when the composite fiber bundle 12 having a long shape is directly fed to the plasticizing cylinder, the composite fibers 11 in the molded article 10 become longer. The injection molding machine used for manufacturing the molded article 10, which is advantageous in improving the mechanical strength of the molded article 10, is not limited to the screw pre-plasticizing type, and various types of injection molding machines may be used.

It is confirmed that the fiber volume content (Vf) of the composite fibers 11 of the molded article 10 and the tensile strength, which is one of the mechanical strengths, have a positive correlation, and a higher fiber volume content is preferable from the viewpoint of increasing the tensile strength. On the other hand, it is confirmed that the effect of suppressing the variation in the tensile strength of the molded article 10 is significant by setting the fiber volume content to 27% or more. From this viewpoint, it is preferable to set the fiber volume content to 27% or more, and a fiber volume content of 27% or more ensures that the tensile strength of the molded article 10 is high. The fiber volume content (Vf) of the composite fibers 11 of the molded article 10 can be adjusted by increasing or decreasing a rotation speed of the screw.

The fiber volume content (Vf) of the composite fibers 11 in the molded article 10 is obtained by Expression (3) using the masses before and after combustion of the molded article 10.
[Expression 2]

$$\mathrm{Vf} = \left\{ \frac{\left(\frac{W_{CF}}{W_S}\right)/d_{CF}}{\left[1 - \left(\frac{W_{CF}}{W_S}\right)\right]/d_R + \left(\frac{W_{CF}}{W_S}\right)/d_{CF}} \right\} \times 100 \quad \cdots (3)$$

In Formula (3), the value $W_S$ is the mass of the molded article 10 before combustion, the value $W_{CF}$ is the mass of the residue remaining after removing the matrix resin M from the molded article 10 by combustion, the value $d_R$ is the specific gravity of the matrix resin M, and the value $d_{CF}$ is the specific gravity of the carbon fibers 13. In this example, since the volume and weight of the CNTs 17 and the sizing agent 15 in the composite fibers 11 are much smaller than those of the carbon fibers 13, the fiber volume content of the composite fibers 11 is obtained by regarding the specific gravity $d_{CF}$ of the carbon fibers 13 as the specific gravity of the composite fibers 11. The measurement of the fiber volume content using this combustion method conforms to JIS K 7075-1991.

As the specific gravity $d_{CF}$ of the carbon fibers 13, a value measured by a measuring device (for example, a highprecision electronic gravimeter SD-200L (manufactured by Alfa Mirage Co., Ltd.)) is used, but a catalog value (nominal value of the manufacturer of the carbon fibers 13) may be used. As the specific gravity $d_R$ of the matrix resin M, a value measured by a measuring device is used.

The molded article 10 is manufactured as described above, and in the molded article 10, the matrix resin M enters the gaps 19 of the structure 14 and is cured. Therefore, in the molded article 10, due to the anchor effect and the reduction of the stress concentration by the structure 14, the carbon fibers 13 or the composite fibers 11 are unlikely to peel off from the matrix resin M, and the mechanical strength such as the tensile strength is improved.

The molded article 10 obtained by injection molding as described above may be used as a primary molded article, and the primary molded article may be further molded to manufacture a secondary molded article. For example, a secondary molded article having a desired shape may be manufactured by manufacturing a primary molded article into a flat plate shape and pressing the primary molded article.

Although not limited to the injection molded article manufactured as described above, composite fibers in a matrix resin can be easily recycled. Fig. 10 illustrates an example of recycling. A product 31 manufactured in a manufacturing step ST11 is a resin containing the composite fibers 11, and examples of the product 31 include a molded article (carbon fiber reinforced plastic) in which the composite fibers 11 are used as reinforcing fibers, and a prepreg which is an intermediate material used for manufacturing a molded article.

For example, in a case where the product 31 is a prepreg, the manufacture step ST11 is a step of manufacturing a prepreg from a resin used as a matrix resin of a molded article and the composite fibers 11. The method for manufacturing a molded article as the product 31 is not limited, and examples thereof include injection molding as described above, a press molding method using a prepreg, an autoclave molding method, a bagging molding method, a sheet winding method, an internal pressure molding method, a hand layup method using no prepreg, a filament winding method, and a pultrusion molding method.

In a recovery step ST12, scraps of the prepreg and the molded article generated in the molded article manufacturing step ST11, scraps generated in the prepreg manufacturing step, and unnecessary molded articles are recovered as a composite 32. The composite 32 is obtained by integrating the composite fibers 11 and a resin. The composite 32 has a form in which the composite fibers 11 are contained in a resin, a form in which a resin adheres to a part of the composite fibers 11, and the like, similarly to the prepreg and the molded article. In this example, the recovery step ST12 is a preparation step.

In the removing step ST13, the resin is removed from the recovered composite 32. For example, the resin is removed by heating the composite 32 to a high temperature, for example, 500°C in a furnace to thermally decompose or burn the resin. A heating temperature of the composite 32 is determined as a temperature at which the resin can be thermally decomposed or burned and the carbon fibers 13 of the composite fibers 11 and the structure 14 on the surfaces thereof can be left. At this time, the sizing agent 15 applied to the structure 14 may or may not be removed by thermal decomposition or combustion together with the resin. Accordingly, as a product, CNT-adhered carbon fibers 33 including the carbon fibers 13 and the carbon fibers 13 having the structure 14 provided on the surfaces thereof are obtained. The CNT-adhered carbon fibers 33 thus obtained may be cleaned. In addition, the removal of the resin in the removing step ST13 is not limited to thermal decomposition or combustion, and may be, for example, a dissolution method using an organic solvent or an acid or alkali.

In a composite material manufacturing step ST14, a carbon fiber composite material 34 is manufactured in which the CNT-adhered carbon fibers 33 obtained in the removing step ST13 are used as reinforcing fibers. That is, a carbon fiber composite material 34 is manufactured in which the CNT-adhered carbon fibers 33 are embedded in a resin (matrix resin). The carbon fiber composite material 34 is a molded article or a prepreg manufactured by various methods as described above. The resin used in the composite material manufacturing step ST14 may be a resin corresponding to the carbon fiber composite material 34 to be manufactured or a manufacturing method thereof.

For example, carbon fibers obtained by heating a molded article to a high temperature to remove a resin have a deactivated surface, and thus adhesion strength with a matrix resin is reduced. Therefore, in order to manufacture a carbon fiber composite material using the carbon fibers, it is necessary to perform a surface treatment on the carbon fibers so as to increase the adhesion strength with the matrix resin.

In contrast, in the CNT-adhered carbon fibers 33, the structure 14 is formed on the surfaces of the carbon fibers 13, and as described above, a matrix resin enters the gaps 19 of the structure 14 and is cured. Thus, high adhesion strength can be obtained between the CNT-adhered carbon fibers 33 and the matrix resin even without a surface treatment. As a result, a molded article having high mechanical strength can be manufactured. In addition, in a case where the CNT-adhered carbon fibers 33 are used in injection molding as described above, when a sizing agent is removed, partial detachment of the structure 14 may occur during kneading of a thermoplastic resin. However, an injection molded article having higher mechanical strength than the structure 14 remaining on the surfaces of the carbon fibers 13 can be manufactured.

In the above description, although an example in which a product includes, as reinforcing fibers, composite fibers obtained by applying a sizing agent to a structure has been described, the product may be a product including, as reinforcing fibers, carbon fibers provided with, on surfaces thereof, a structure to which a sizing agent is not applied, instead of the composite fibers 11.

[Examples]

[Example 1]

In Example 1, sample fibers A11 and A12 of the composite fibers 11 were manufactured by the procedure described above, and a peeling test of the CNTs 17 was performed to confirm the effect of the sizing agent 15. The dispersion 28 used when manufacturing the composite fibers 11 was prepared by a material CNT having a bent shape as described above. Fig. 11 illustrates an SEM photograph of the material CNT used in the preparation of the dispersion 28. The material CNT was formed in a multilayer structure, and a diameter was within a range of 3 nm or more and 10 nm or less. The material CNT was cleaned with 3:1 mixed acid of sulfuric acid and nitric acid to remove a catalytic residue, and was filtered and dried. The material CNT was added to acetone as a dispersion medium of the dispersion 28, and the material CNT was cut using an ultrasonic homogenizer to obtain the CNTs 17. A length of the CNTs 17 in the dispersion 28 was 0.2 $\mu$m or more and 5 $\mu$m or less. In addition, the CNTs 17 in the dispersion 28 could be evaluated as having a bent shape. A concentration of the CNTs 17 in the dispersion 28 was set to 0.12 wt% (= 1200 wt ppm). A dispersing agent and an adhesive were not added to the dispersion 28.

As the carbon fiber bundle 29, TORAYCA (registered trademark) T700SC-12000 (manufactured by Toray Industries, Inc.) was used. The carbon fiber bundle 29 includes 12,000 carbon fibers 13. A diameter of the carbon fibers 13 is approximately 7 $\mu$m, and a length thereof is approximately 500 m. In the carbon fiber bundle 29, the sizing agent for preventing entanglement of the carbon fibers 13 was removed from the surfaces of the carbon fibers 13 before adhesion of the CNTs 17.

In a state of being spread, the carbon fiber bundle 29 was wound around the guide rollers 23 to 26 and was traveled in the dispersion 28 contained in the CNT adhesion tank 22. A traveling speed of the carbon fiber bundle 29 was set to 1 m/minute, and ultrasonic vibration having a frequency of 200 kHz was applied to the dispersion 28 with the ultrasonic generator 27. The immersion time for which the carbon fiber bundle 29 travels between the guide rollers 24 and 25 was set to 6.25 seconds. The immersion time corresponds to 1,250,000 cycles of the ultrasonic vibration applied to the dispersion 28. In the dispersion 28, the carbon fiber bundle 29 was caused to travel at a depth $D_p$ from a liquid surface of the dispersion 28 satisfying a relationship of "$D_p = n \cdot (\lambda/2)$".

After the carbon fiber bundle 29 pulled out from the dispersion 28 was dried, a sizing treatment was performed to obtain the composite fiber bundle 12 in which the sizing agent 15 was applied to the CNTs 17 constituting the structure 14.

In the sizing treatment for the sample fibers A11, a sizing treatment solution obtained by dissolving "Carbodilite V-02" (trade name, manufactured by Nisshinbo Chemical Inc.) as a carbodiimide compound in water was used. In the sizing treatment for the sample fibers A12, a sizing treatment solution obtained by dissolving an epoxy resin in acetone was used. Concentrations of the carbodiimide compound and the epoxy resin in the sizing treatment solutions were adjusted such that the sizing agent mass ratio Rm was 1.0%. After applying the sizing treatment solution, water as a solvent was evaporated to dry the composite fiber bundle 12.

A plurality of composite fibers 11 obtained by cutting out a part of the composite fiber bundle 12 subjected to the sizing treatment as described above were used as the sample fibers A11 and A12. It was observed with SEM that a plurality of CNTs 17 were uniformly dispersed and adhered to the sample fibers A11 and A12. As a result, in the sample fibers A11 and A12, it is confirmed that the CNTs 17 were uniformly adhered in a narrow range (locally) and a wide range in a fiber axis direction of the carbon fibers 13, and thus the structure 14 was formed. In addition, it is confirmed that the structure 14 was formed in a non-woven fabric shape having a three-dimensional mesh structure constituted by a plurality of the CNTs 17, that is, the gaps 19, and most of the gaps 19 were not filled up by the sizing agent 15. In Example 1, post-cure was not performed.

In the peeling test of the CNTs 17, the sample fibers A11 and A12 were immersed in a mixed solution obtained by mixing water and a surfactant with each other in separate containers, and ultrasonic vibration was applied from an ultrasonic generator to the mixed solution for 10 minutes. A length of the sample fibers immersed in the mixed solution was 1 m, a concentration of the surfactant in the mixed solution was 0.2 mass%, and a frequency of the ultrasonic vibration applied to the mixed solution was 100 kHz.

In the peeling test of the sample fibers A11, it could be confirmed that the mixed solution was slightly turbid, and the CNTs 17 hardly fell off from the carbon fibers 13. In the peeling test of the sample fibers A12, the mixed solution became black and turbid, but when it is confirmed after the peeling test, CNTs 17 which did not fall off from the carbon fibers 13 were confirmed. That is, it can be seen that contact between the CNTs 17, and contact between the CNTs 17 and the carbon fibers 13 become strong due to the sizing agent 15 having a carbodiimide-derived structure, collapse of the structure 14 and peeling-off of the structure 14 from the carbon fibers 13 are effectively suppressed, which is particularly preferable.

[Example 2]

In Example 2, a plurality of test pieces A21 to A23 having different fiber volume contents were prepared using the molded article 10 in which the composite fibers 11 are used as reinforcing fibers, and the measurement of the fiber volume contents and a tensile test were performed.

The test pieces A21 to A23 were prepared by continuously feeding the composite fiber bundle 12 in a long shape to a plasticizing cylinder using a screw pre-plasticizing type injection molding machine (LFormer 100-AP, manufactured by Toshiba Machine Co., Ltd.). The composite fiber bundle 12 was manufactured under the same conditions as the sample fibers A11 of Example 1, but in Example 2, a composite fiber bundle 12 subjected to post-cure was used. A post-cure temperature was 60°C, and post-cure time was 1 day. As a thermoplastic resin used as the matrix resin M, MX nylon (trade name, manufactured by Mitsubishi Gas Chemical Company, Inc.) was used. The test pieces A21 to A23 were prepared such that the fiber volume contents of the composite fibers 11 were approximately 20%, 24%, and 27%, respectively. The shape and size of the test pieces A21 to A23 were prepared as an A-type dumbbell shape conforming to ISO 3167:2002.

In addition, as Comparative Example 1, a plurality of test pieces B21 to B23 having substantially the same fiber volume contents of the carbon fibers as those of the test pieces A21 to A23 were prepared using raw fibers (carbon fibers) as reinforcing fibers, and tensile strengths of the test pieces B21 to B23 was measured in the same manner. The test pieces B21 to B23 were prepared in the same manner as the test pieces A21 to A23. For each of the test pieces A21 to A23 and B21 to B23, TORAYCA T700SC-12000 (manufactured by Toray Industries, Inc.) was used as the carbon fibers 13.

A part of each of the prepared test pieces A21 to A23 and test pieces B21 to B23 was used to measure the fiber volume contents. The fiber volume contents were obtained by a combustion method. The test pieces were burned by raising the temperature from room temperature to 450°C in 2 hours, and then maintaining the temperature at 450°C for 10 hours to completely remove the matrix resin M. As a result, averages of the fiber volume contents of the test pieces A21 to A23 were 20.39%, 24.48%, and 27.32%, respectively, and all of the samples of the test piece A23 were 27% or more. In addition, averages of the fiber volume contents of the test pieces B21 to B23 were 20.82%, 26.08%, and 28.29%, respectively.

The tensile test was performed in accordance with JIS K7161:2014, and the tensile strength (maximum tensile stress) of each of the test pieces A21 to A23 was measured. The tensile test was performed at a tensile speed (test speed) of 5 mm/min.

The tensile strengths of Example 2 and Comparative Example 1 obtained by the tensile test are illustrated in Fig. 12, and maximum loads (maximum test forces) corresponding to the tensile strengths are illustrated in Fig. 13. Further, the displacement of the test pieces at the maximum loads is illustrated in Fig. 14. In Figs. 12 to 14, an average value of each of the test pieces A21 to A23 and B21 to B23 is illustrated, and an error bar indicates a distribution range of actual measured values.

Regarding the maximum tensile stress and the maximum load, the test piece A21 was superior to the test piece B21 by approximately 2%, the test piece A22 was superior to the test piece B22 by approximately 10.4%, and the test piece A23 was superior to the test piece B23 by approximately 11.1%.

In addition, from the measurement results described above, it can be seen that, with regard to the maximum tensile stress and the maximum load, when the composite fibers 11 are used as reinforcing fibers, there is a positive

correlation between the fiber volume content and the tensile strength, and the maximum tensile stress increases as the fiber volume content increases. In contrast, when carbon fibers (raw fibers) are used as reinforcing fibers, a positive correlation was not found between the fiber volume content and the tensile strength. Further, in a case where the composite fibers 11 are used as reinforcing fibers, it can be seen that when the fiber volume content is 27% (or more), variations in the maximum tensile stress and the maximum load become very small. In contrast, in a case where carbon fibers (raw fibers) are used as reinforcing fibers, it can be seen that the variations in the maximum tensile stress and the maximum load increases as the fiber volume content increases.

It can be seen that the displacement at the maximum load tends to decrease as the fiber volume content increases in a case where carbon fibers (raw fibers) are used as reinforcing fibers, but hardly changes regardless of the fiber volume content in a case where the composite fibers 11 are used as reinforcing fibers. In a case where the composite fibers 11 are used as reinforcing fibers, the variation in the displacement at the maximum load decreases as the fiber volume content increases, and the variation becomes very small when the fiber volume content is 27% (or more).

[Example 3]

In Example 3, PA66 (Nylon 66) was used as the thermoplastic resin for forming the matrix resin M, and a plurality of test pieces A31 and A32 having different fiber volume contents were manufactured as the molded article 10 in which the composite fibers 11 are used as reinforcing fibers. As Comparative Example 2, test pieces B31 and B32 were manufactured using PA66 as the thermoplastic resin and using carbon fibers (raw fibers) as reinforcing fibers. The test pieces A31 and A32 and the test pieces B31 and B32 were subjected to the measurement of the fiber volume content and the tensile test in the same manner as in Example 2.

The test pieces A31 and B31 were manufactured such that the fiber volume content was approximately 20%, and the test pieces A32 and B32 were manufactured such that the fiber volume content was approximately 24%. The other manufacturing conditions of the test pieces A31 and A32 and the test pieces B31 and B32 are the same as those in Example 2. The fiber volume content was obtained by a combustion method using a part of each of the test pieces A31, A32, B31, and B32, and the fiber volume contents of the test pieces A31, A32, B31, and B32 were 19.5%, 24.0%, 19.4%, and 23.6%, respectively.

The tensile strengths of Example 3 and Comparative Example 2 obtained by the tensile test are illustrated in Fig. 15, and the displacement of the test pieces at the maximum load is illustrated in Fig. 16. Figs. 15 and 16 also illustrates measurement results of the test piece C31 made of only the matrix resin M formed of PA66 without including reinforcing fibers. In Figs. 15 and 16, average values for each of the test pieces A31, A32, B31, B32, and C31 are illustrated.

As can be seen from Fig. 15, the tensile strengths of the test pieces A31 and A32 and the test pieces B31 and B32 including the reinforcing fibers are greatly improved compared to the test piece C31 including only the matrix resin M. However, the tensile strengths of the test pieces A31 and A32 including the composite fibers 11 as the reinforcing fibers are greater than those of the test pieces B31 and B32 including the carbon fibers as the reinforcing fibers (raw fibers). In addition, when the test pieces having almost the same fiber volume content were compared, the test piece A31 having a fiber volume content of approximately 20% had a tensile strength increased by 5% compared to the test piece B31, and the test piece A32 having a fiber volume content of approximately 24% had a tensile strength increased by 11% compared to the test piece B32.

Fig. 17 illustrates an image obtained by observing a fracture surface of the test piece A31 after the tensile test with a scanning electron microscope, and Fig. 18 illustrates an image obtained by observing a fracture surface of the test piece B31 after the tensile test with a scanning electron microscope. In the test piece B31, it can be seen that surfaces of the carbon fibers (raw fibers) as the reinforcing fibers are exposed, and the matrix resin M is peeled off and fractured at an interface of the carbon fibers (raw fibers), that is, interfacial fracture occurs. In contrast, in the test piece A31, it can be seen that surfaces of the composite fibers 11 are covered with the matrix resin M, and the matrix resin M is fractured, that is, aggregation fracture occurs. From this, it can be seen that due to the anchor effect and the reduction of stress concentration by the structure 14, the carbon fibers 13 or the composite fibers 11 are unlikely to peel off from the matrix resin M, and the composite fibers 11 further improve the tensile strength of the molded article 10.

Fig. 19 illustrates an image of surfaces of the composite fibers 11 in a residue obtained by removing the matrix resin M of the test piece A31 by combustion, observed with a field emission scanning electron microscope (FE-SEM). According to this image, when the molded article 10 is manufactured, it can be confirmed that the structure 14 of the composite fibers 11 remains on the surfaces of the carbon fibers 13 without being peeled off even after kneading or the like in an injection molding machine. In addition, since no residue of the matrix resin M remains on the surfaces of the composite fibers 11, the composite fibers 11 can be recycled as it is, which is advantageous in that the recycling step can be simplified.

Reference Sign List

10: Molded article
11: Composite fiber
13: Carbon fiber
14: Structure
15: Sizing agent
17: Carbon nanotube
M: Matrix resin

## Claims

**1.** An injection molded article comprising:

a plurality of composite fibers including a carbon fiber, a structure that includes a plurality of carbon nanotubes having a bent shape with a bent portion, that forms a network structure including a contact portion where the carbon nanotubes are in direct contact with each other, and that is provided on a surface of the carbon fiber, and a sizing agent that is provided around at least the contact portion to cross-link the carbon nanotubes in direct contact with each other via a structure formed by a reaction with a functional group of the carbon nanotubes; and
a matrix resin formed of a thermoplastic resin in which the plurality of composite fibers are embedded.

**2.** The injection molded article according to claim 1, wherein
the sizing agent cross-links the carbon nanotubes in direct contact with each other via a carbodiimide-derived structure formed by a reaction between the functional group of the carbon nanotubes and a carbodiimide group.

**3.** The injection molded article according to claim 1, wherein
the sizing agent cross-links the carbon nanotubes in direct contact with each other via an isocyanate-derived structure formed by a reaction between the functional group of the carbon nanotubes and an isocyanate group.

**4.** The injection molded article according to any one of claims 1 to 3, wherein
a fiber volume content of the plurality of composite fibers is 27% or more.

**5.** The injection molded article according to any one of claims 1 to 3, wherein
the structure has a thickness in a range of 50 nm or more and 200 nm or less.

**6.** The injection molded article according to any one of claims 1 to 3, wherein
the carbon fiber provided with the structure is a product obtained by removing a resin from a composite in which the carbon fiber provided with the structure and the resin are integrated.

**7.** A method for manufacturing an injection molded article, comprising:

a kneading step of kneading a composite fiber and a thermoplastic resin; and
an injection step of injection-molding the thermoplastic resin containing the composite fiber to obtain an injection molded article in which the composite fiber is embedded in a matrix resin formed of the thermoplastic resin, wherein
the composite fiber includes a carbon fiber, a structure that includes a plurality of carbon nanotubes having a bent shape with a bent portion, that forms a network structure including a contact portion where the carbon nanotubes are in direct contact with each other, and that is provided on a surface of the carbon fiber, and a sizing agent that is provided around at least the contact portion to cross-link the carbon nanotubes in direct contact with each other via a structure formed by a reaction with a functional group of the carbon nanotubes.

**8.** The method for manufacturing an injection molded article according to claim 7, wherein
the sizing agent cross-links the carbon nanotubes in direct contact with each other via a carbodiimide-derived structure formed by a reaction between the functional group of the carbon nanotubes and a carbodiimide group.

**9.** The method for manufacturing an injection molded article according to claim 7, wherein
the sizing agent cross-links the carbon nanotubes in direct contact with each other via an isocyanate-derived structure formed by a reaction between the functional group of the carbon nanotubes and an isocyanate group.

**10.** The method for manufacturing an injection molded article according to any one of claims 7 to 9, wherein

the kneading step includes continuously feeding the composite fiber in a long shape and cutting the composite fiber.

**11.** The method for manufacturing an injection molded article according to any one of claims 7 to 9, wherein the kneading step includes adjusting a ratio between the thermoplastic resin and the composite fiber such that a fiber volume content of the composite fiber in the injection molded article is 27% or more.

**12.** The method for manufacturing an injection molded article according to any one of claims 7 to 9, further comprising: a removing step of removing a resin from a composite in which the carbon fiber provided with the structure and the resin are integrated to obtain the carbon fiber and the structure of the composite fiber.

**13.** The method for manufacturing an injection molded article according to any one of claims 7 to 9, further comprising: a post-cure step of post-curing the sizing agent of the composite fiber before the kneading step.

**14.** The method for manufacturing an injection molded article according to claim 13, wherein the post-cure satisfies "$T \geq 14.43 \ln(D) + 60$", where T (°C) is a post-cure temperature of the composite fiber and D (number of days) is a post-cure period during which the post-cure temperature is maintained.

**15.** A method for manufacturing a composite fiber, comprising:

a structure forming step of forming, on a surface of a carbon fiber, a structure that includes a plurality of carbon nanotubes having a bent shape with a bent portion, and that forms a network structure including a contact portion where the carbon nanotubes are in direct contact with each other;
a sizing treatment step of bringing the carbon fiber on which the structure is formed into contact with a sizing treatment solution in which a raw material of a sizing agent that cross-links the carbon nanotubes in direct contact with each other is dissolved, and applying the sizing agent to obtain a composite fiber; and
a post-cure step of post-curing the sizing agent of the composite fiber.

**16.** The method for manufacturing a composite fiber according to claim 15, wherein the post-cure satisfies "$T \geq 14.43 \ln(D) + 60$", where T (°C) is a post-cure temperature of the composite fiber and D (number of days) is a post-cure period during which the post-cure temperature is maintained.

**17.** The method for manufacturing a composite fiber according to claim 15 or 16, wherein the sizing agent cross-links the carbon nanotubes in direct contact with each other via a carbodiimide-derived structure formed by a reaction between a functional group of the carbon nanotubes and a carbodiimide group.

**18.** The method for manufacturing a composite fiber according to claim 15 or 16, wherein the sizing agent cross-links the carbon nanotubes in direct contact with each other via an isocyanate-derived structure formed by a reaction between a functional group of the carbon nanotubes and an isocyanate group.

**19.** A CNT-adhered carbon fiber, which is a product obtained by removing a resin from a composite in which the resin and a carbon fiber are integrated, the carbon fiber being provided with, on a surface thereof, a structure that includes a plurality of carbon nanotubes having a bent shape with a bent portion and that forms a network structure including a contact portion where the carbon nanotubes are in direct contact with each other.

**20.** A method for manufacturing a CNT-adhered carbon fiber, comprising:

a preparation step of preparing a composite in which a resin and a carbon fiber are integrated, the carbon fiber being provided with, on a surface thereof, a structure that includes a plurality of carbon nanotubes having a bent shape with a bent portion and that forms a network structure including a contact portion where the carbon nanotubes are in direct contact with each other; and
a removing step of removing the resin from the composite to obtain a CNT-adhered carbon fiber.

**21.** A method for manufacturing a carbon fiber composite material, comprising:

a preparation step of preparing a composite in which a resin and a carbon fiber are integrated, the carbon fiber being provided with, on a surface thereof, a structure that includes a plurality of carbon nanotubes having a bent shape with a bent portion and that forms a network structure including a contact portion where the carbon nanotubes are in direct contact with each other;

a removing step of removing the resin from the composite to obtain a CNT-adhered carbon fiber; and

a composite material preparation step of obtaining a carbon fiber composite material in which the CNT-adhered carbon fiber is embedded in a matrix resin.

Fig. 1

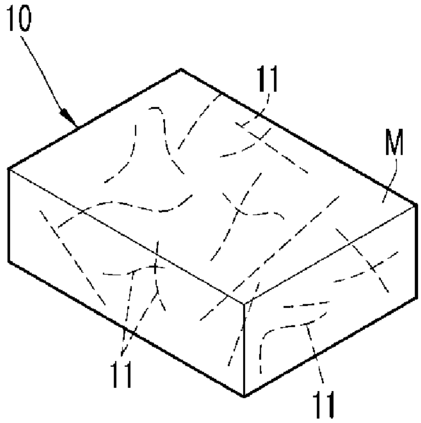


Fig. 2

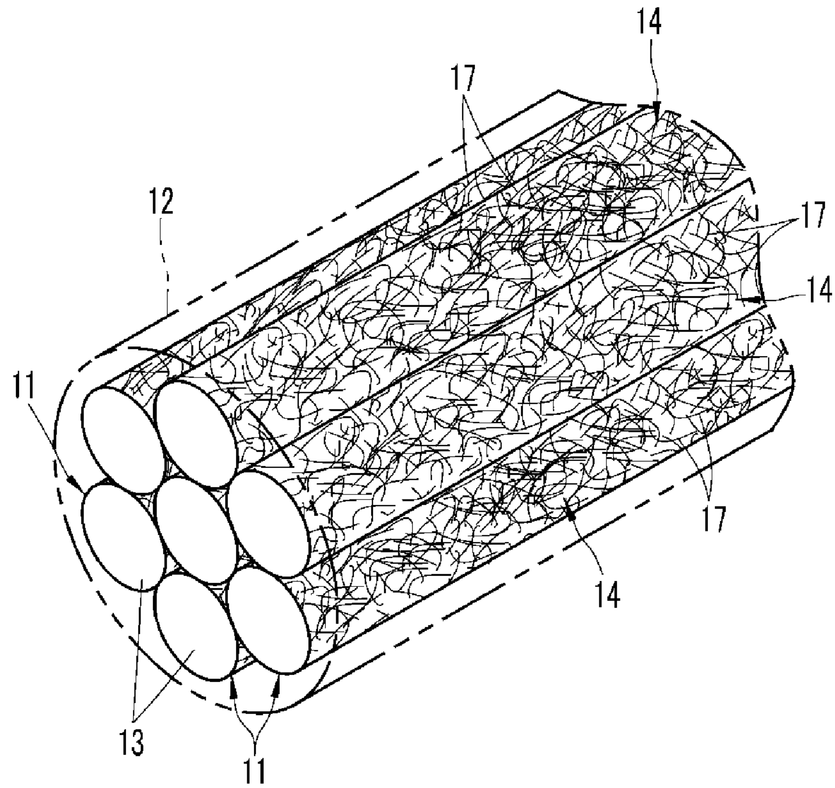

Fig. 3

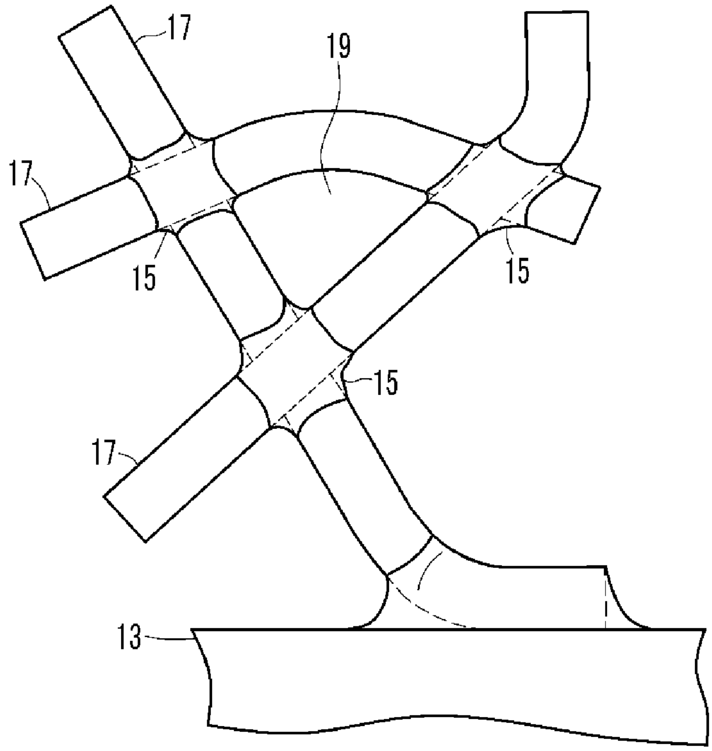


Fig. 4

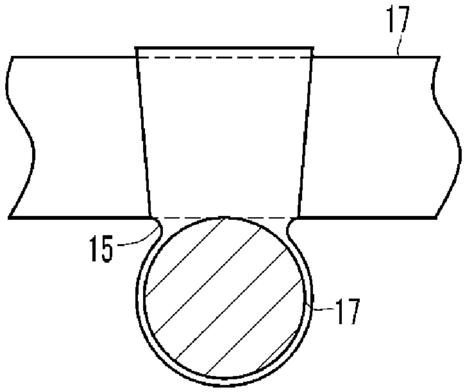

Fig. 5

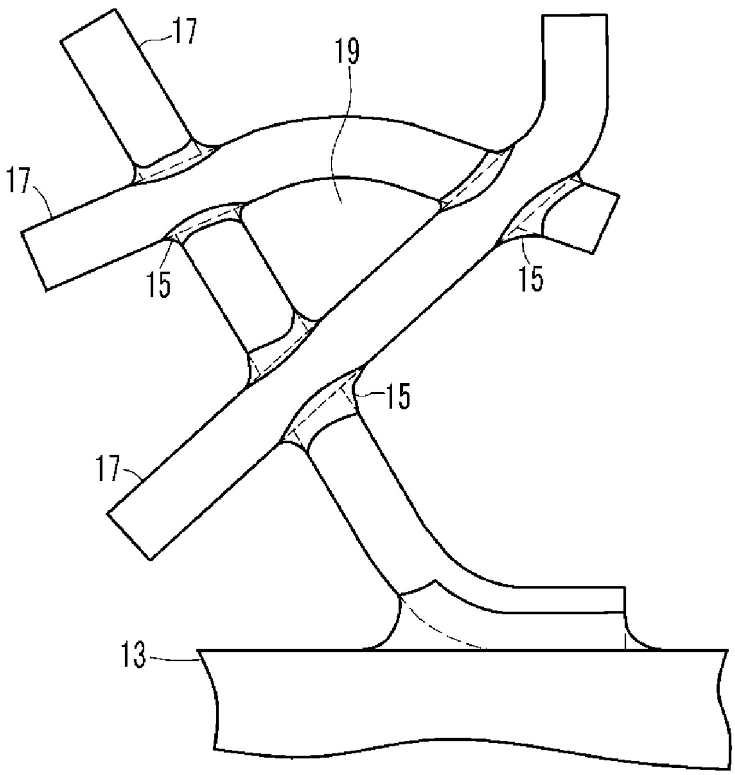


Fig. 6

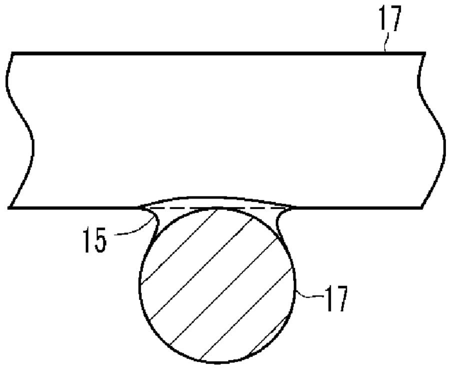

Fig. 7

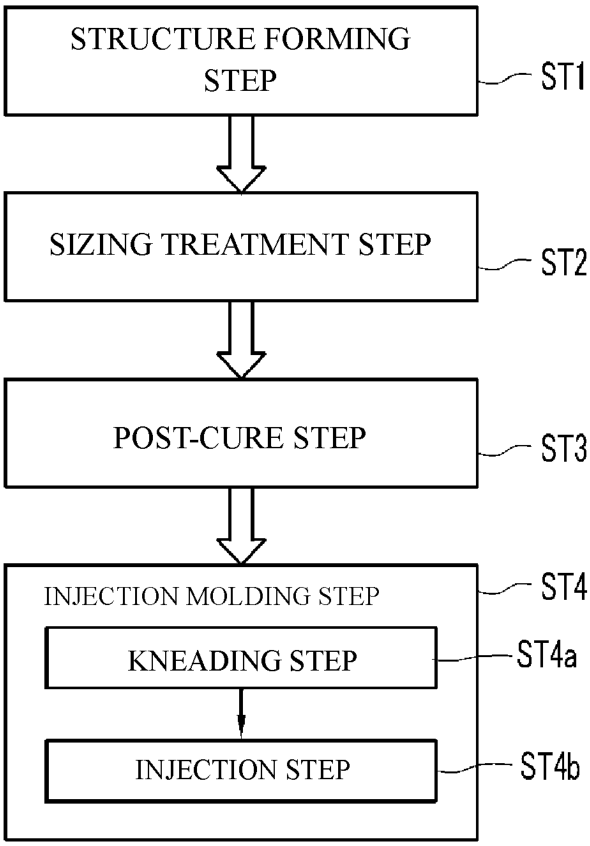
STRUCTURE FORMING STEP
ST1
SIZING TREATMENT STEP
ST2
POST-CURE STEP
ST3
INJECTION MOLDING STEP
ST4
KNEADING STEP
ST4a
INJECTION STEP
ST4b

Fig. 8

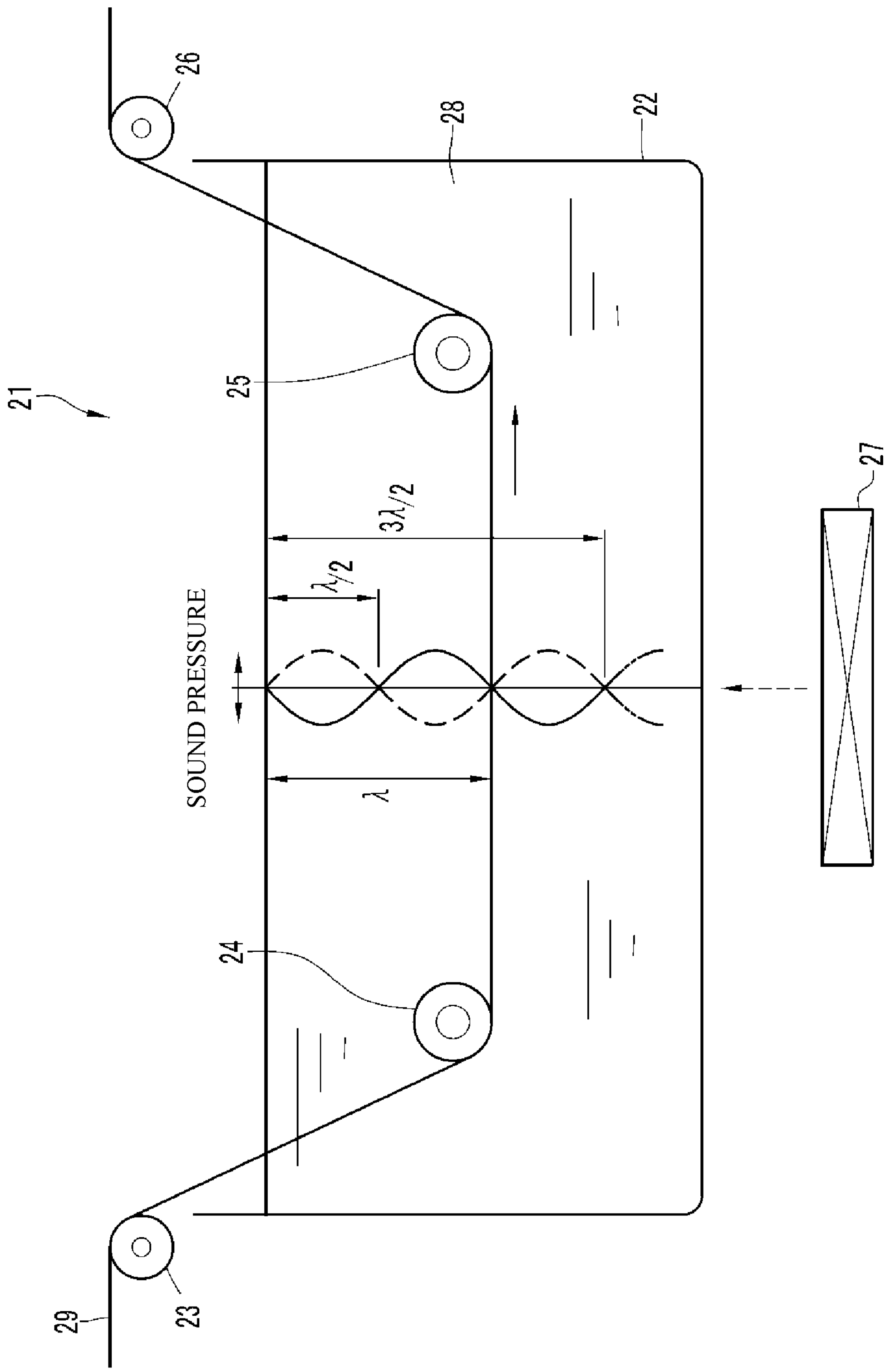

Fig. 9

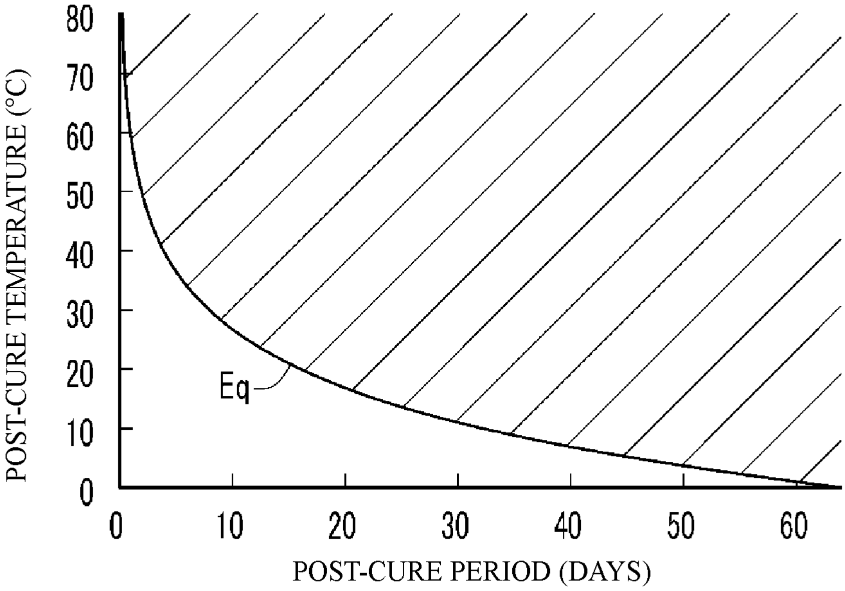
80
70
60
50
40
30
20
10
0
POST-CURE TEMPERATURE (°C)
Eq
0
10
20
30
40
50
60
POST-CURE PERIOD (DAYS)

Fig. 10

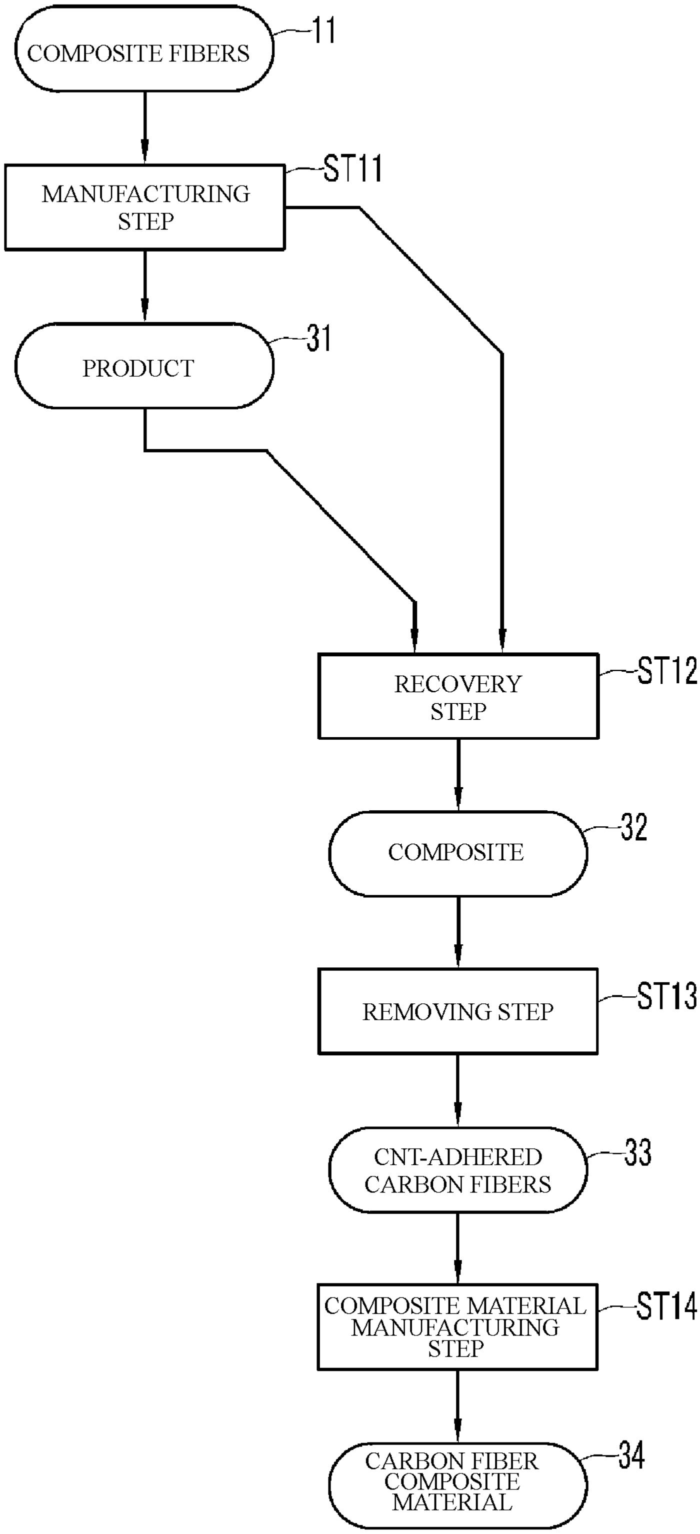
COMPOSITE FIBERS
11
MANUFACTURING STEP
ST11
PRODUCT
31
RECOVERY STEP
ST12
COMPOSITE
32
REMOVING STEP
ST13
CNT-ADHERED CARBON FIBERS
33
COMPOSITE MATERIAL MANUFACTURING STEP
ST14
CARBON FIBER COMPOSITE MATERIAL
34

Fig. 11

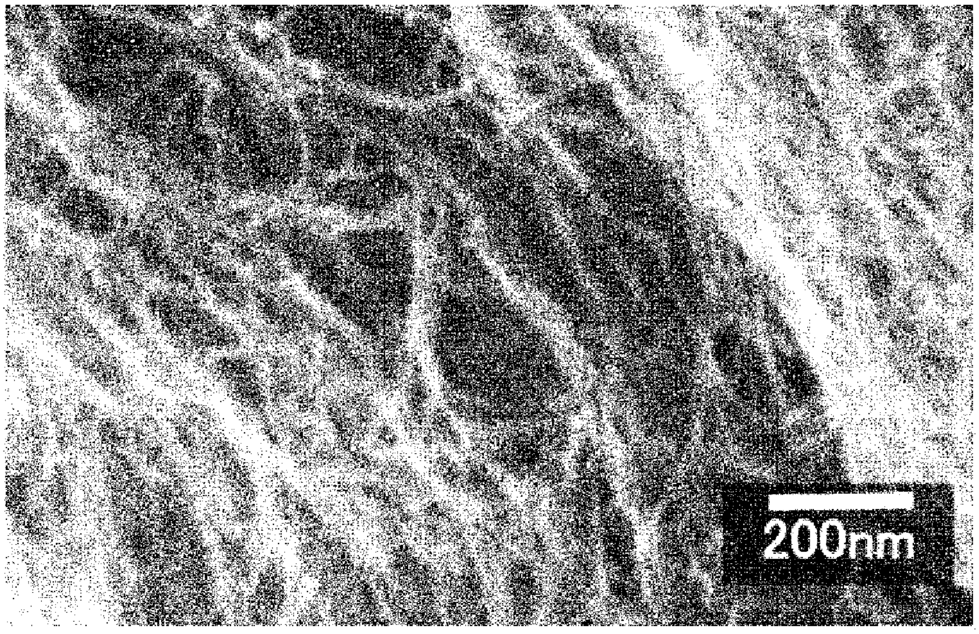
200nm

Fig. 12

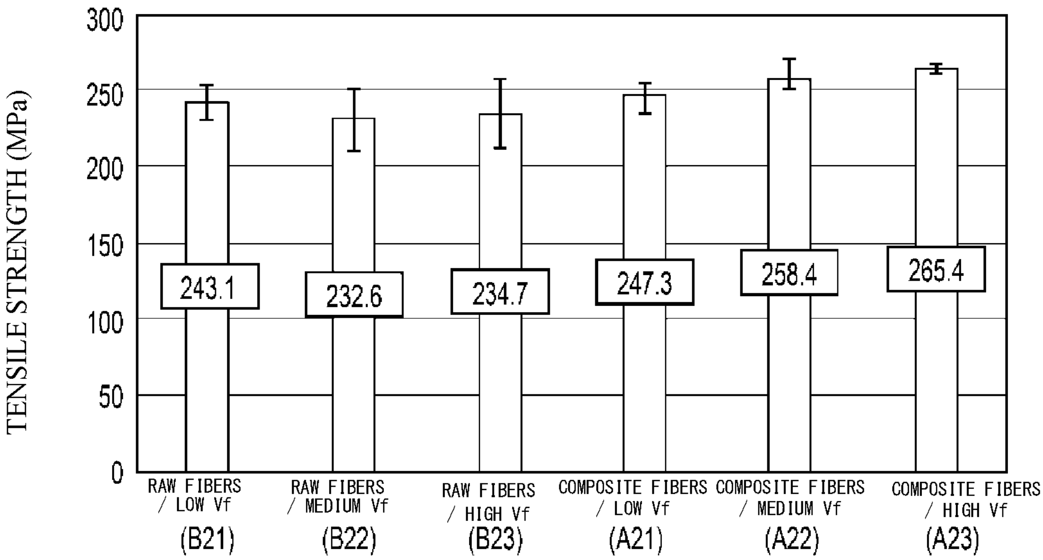
300
250
200
150
100
50
0
TENSILE STRENGTH (MPa)
243.1
232.6
234.7
247.3
258.4
265.4
RAW FIBERS / LOW Vf
(B21)
RAW FIBERS / MEDIUM Vf
(B22)
RAW FIBERS / HIGH Vf
(B23)
COMPOSITE FIBERS / LOW Vf
(A21)
COMPOSITE FIBERS / MEDIUM Vf
(A22)
COMPOSITE FIBERS / HIGH Vf
(A23)

Fig. 13

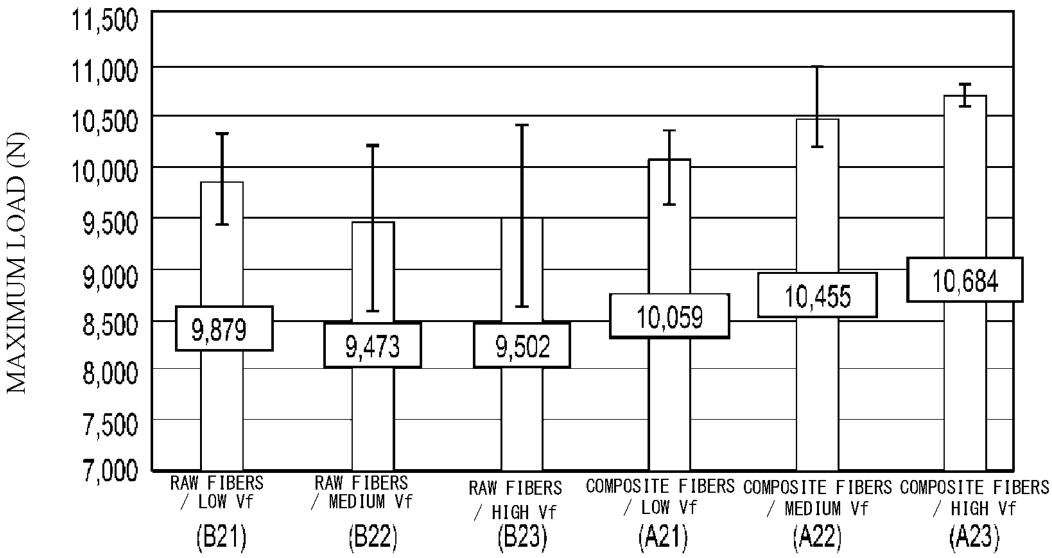
11,500
11,000
10,500
10,000
9,500
9,000
8,500
8,000
7,500
7,000
MAXIMUM LOAD (N)
9,879
9,473
9,502
10,059
10,455
10,684
RAW FIBERS / LOW Vf
(B21)
RAW FIBERS / MEDIUM Vf
(B22)
RAW FIBERS / HIGH Vf
(B23)
COMPOSITE FIBERS / LOW Vf
(A21)
COMPOSITE FIBERS / MEDIUM Vf
(A22)
COMPOSITE FIBERS / HIGH Vf
(A23)

Fig. 14

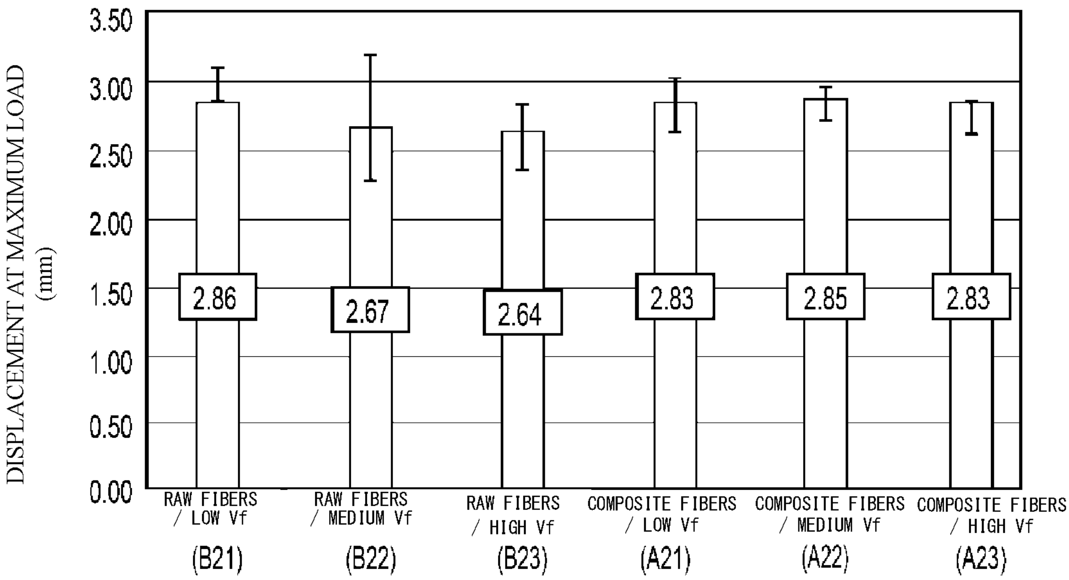
3.50
3.00
2.50
2.00
1.50
1.00
0.50
0.00
DISPLACEMENT AT MAXIMUM LOAD (mm)
2.86
2.67
2.64
2.83
2.85
2.83
RAW FIBERS / LOW Vf
(B21)
RAW FIBERS / MEDIUM Vf
(B22)
RAW FIBERS / HIGH Vf
(B23)
COMPOSITE FIBERS / LOW Vf
(A21)
COMPOSITE FIBERS / MEDIUM Vf
(A22)
COMPOSITE FIBERS / HIGH Vf
(A23)

Fig. 15

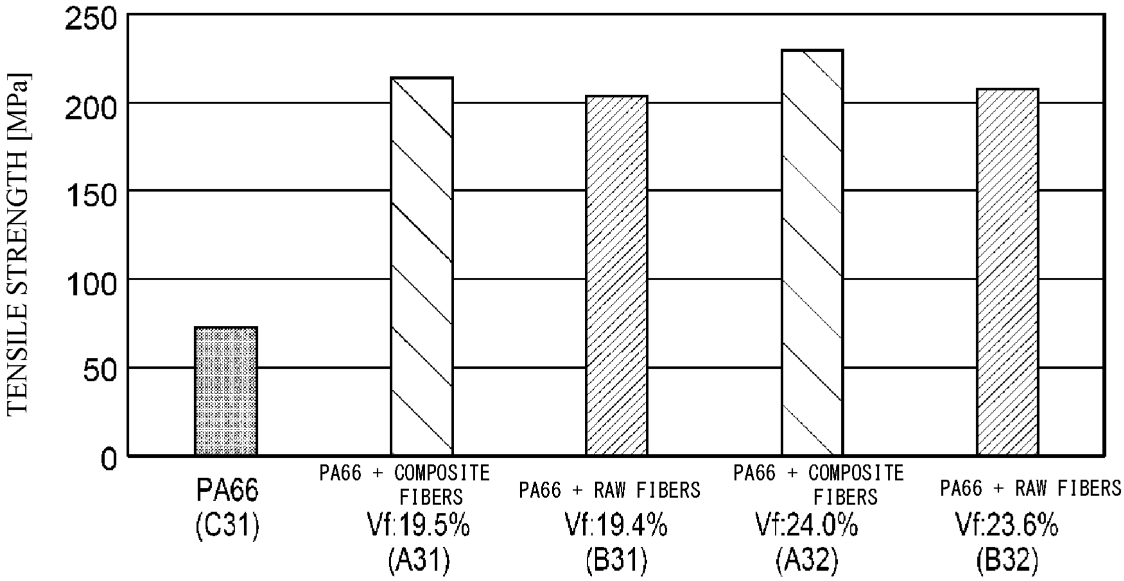
TENSILE STRENGTH [MPa]
250
200
150
100
50
0
PA66
(C31)
PA66 + COMPOSITE FIBERS
Vf:19.5%
(A31)
PA66 + RAW FIBERS
Vf:19.4%
(B31)
PA66 + COMPOSITE FIBERS
Vf:24.0%
(A32)
PA66 + RAW FIBERS
Vf:23.6%
(B32)

Fig. 16

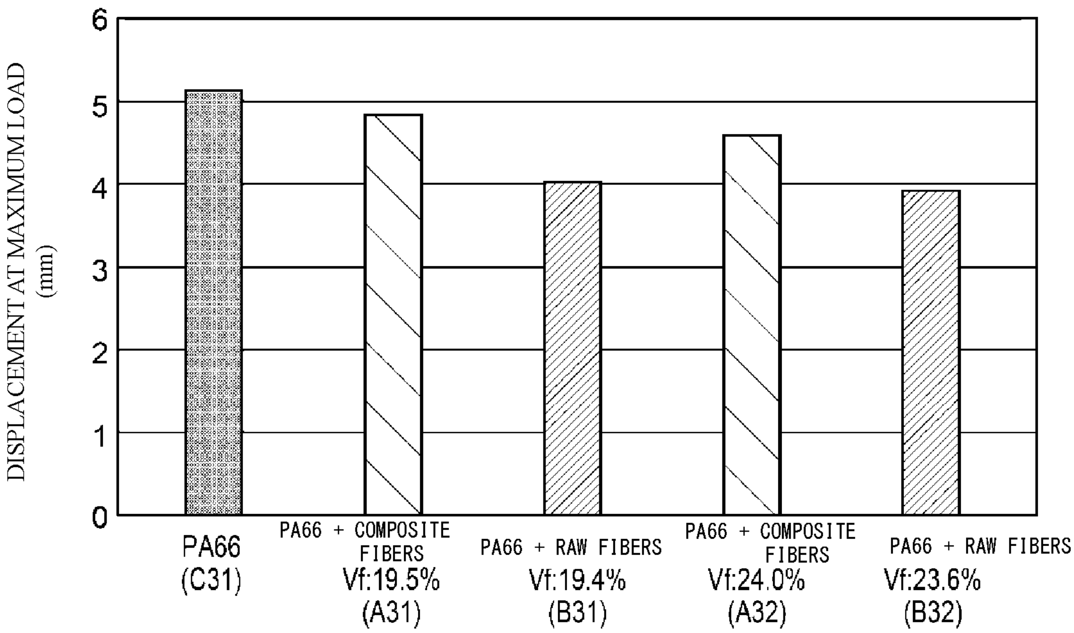
DISPLACEMENT AT MAXIMUM LOAD (mm)
6
5
4
3
2
1
0
PA66
(C31)
PA66 + COMPOSITE FIBERS
Vf:19.5%
(A31)
PA66 + RAW FIBERS
Vf:19.4%
(B31)
PA66 + COMPOSITE FIBERS
Vf:24.0%
(A32)
PA66 + RAW FIBERS
Vf:23.6%
(B32)

Fig. 17

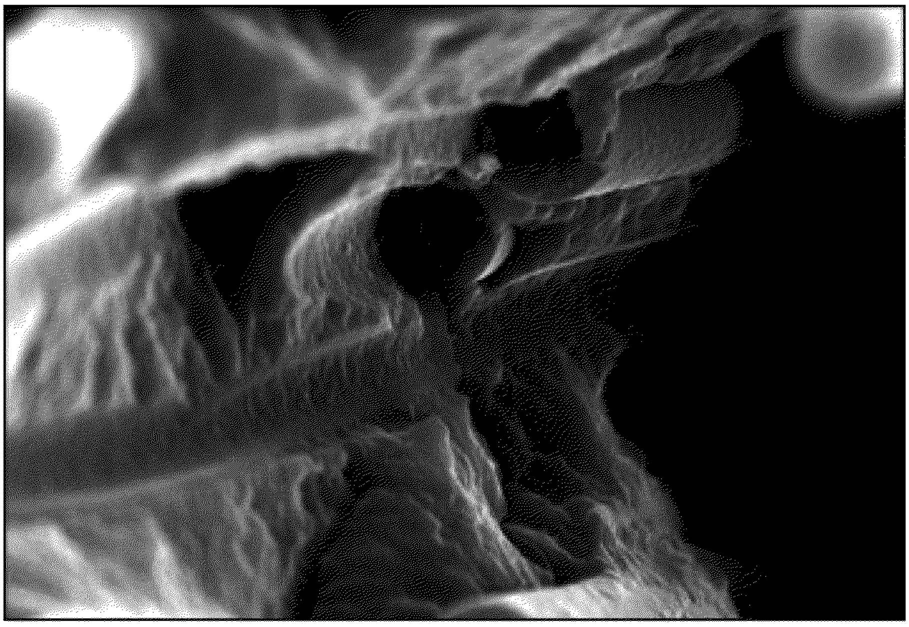

2,400x 4.16μm WD:8.7mm 20kW

Fig. 18

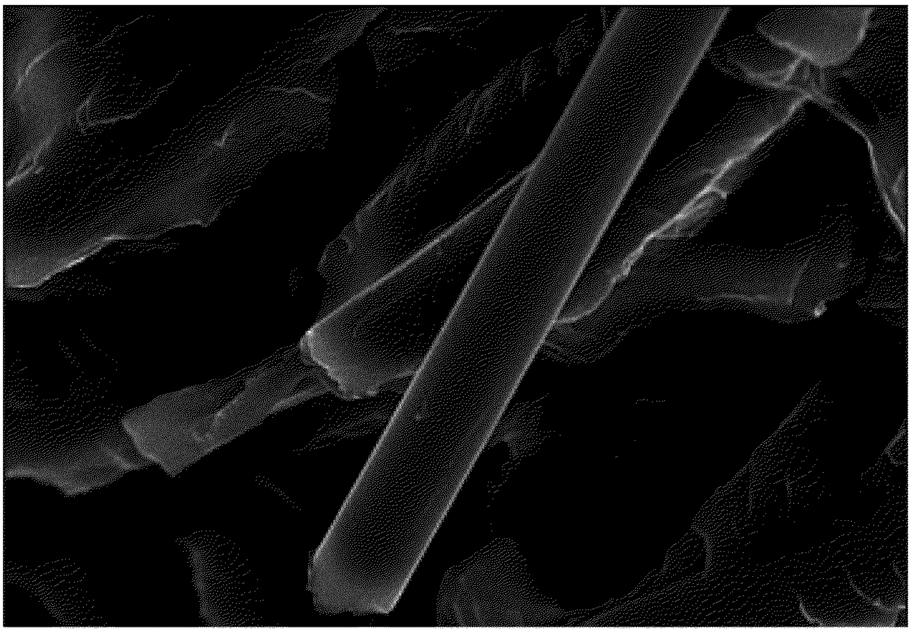

1,900x 5.26μm WD:10.7mm 20kW

Fig. 19

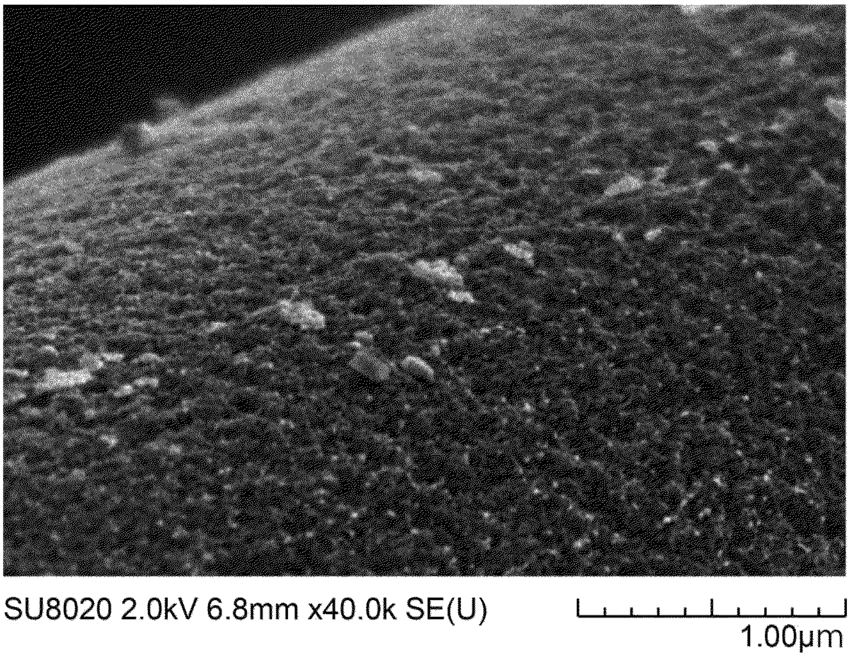

**INTERNATIONAL SEARCH REPORT**

International application No. **PCT/JP2023/017958**

**A. CLASSIFICATION OF SUBJECT MATTER**

***C08J 5/06***(2006.01)i; ***B29C 45/00***(2006.01)i; ***D06M 11/74***(2006.01)i; ***D06M 13/322***(2006.01)i; ***D06M 15/55***(2006.01)i; *B29K 101/12*(2006.01)n; *B29K 105/12*(2006.01)n; *D06M 101/40*(2006.01)n

FI: C08J5/06 CEZ; B29C45/00; D06M11/74; D06M13/322; D06M15/55; B29K101:12; B29K105:12; D06M101:40

According to International Patent Classification (IPC) or to both national classification and IPC

**B. FIELDS SEARCHED**

Minimum documentation searched (classification system followed by classification symbols)

C08J5/06; B29C45/00; D06M11/74; D06M13/322; D06M15/55; B29K101/12; B29K105/12; D06M101/40

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2022/114217 A1 (NITTA CORPORATION) 02 June 2022 (2022-06-02) entire text, in particular, claims, paragraphs [0080]-[0082], examples | 1-21 |
| A | WO 2022/114225 A1 (NITTA CORPORATION) 02 June 2022 (2022-06-02) entire text, in particular, claims | 1-21 |
| A | JP 2013-513020 A (APPLIED NANOSTRUCTURED SOLUTIONS, LLC) 18 April 2013 (2013-04-18) entire text, in particular, claims, examples | 1-21 |
| A | WO 2017/169482 A1 (NISSIN KOGYO CO., LTD.) 05 October 2017 (2017-10-05) entire text | 1-21 |
| A | JP 2003-238816 A (TORAY IND INC) 27 August 2003 (2003-08-27) entire text | 1-21 |
| A | JP 2004-134515 A (YUKA DENSHI CO LTD) 30 April 2004 (2004-04-30) entire text | 1-21 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 July 2023** | **01 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**

International application No.
**PCT/JP2023/017958**

**C. DOCUMENTS CONSIDERED TO BE RELEVANT**

| Category* | Citation of document, with indication, where appropriate, of the relevant passages | Relevant to claim No. |
|---|---|---|
| A | JP 8-059303 A (NISSHINBO IND INC) 05 March 1996 (1996-03-05)<br>entire text | 1-21 |
| A | JP 2015-110747 A (TORAY IND INC) 18 June 2015 (2015-06-18)<br>entire text | 1-21 |
| A | WO 2019/049581 A1 (MATSUMOTO YUSHI-SEIYAKU CO., LTD.) 14 March 2019 (2019-03-14)<br>entire text | 1-21 |
| A | US 2019/0382269 A1 (WICHITA STATE UNIVERSITY) 19 December 2019 (2019-12-19)<br>entire text | 1-21 |
| A | JP 2020-203996 A (ASAHI KASEI CORP) 24 December 2020 (2020-12-24)<br>entire text | 19-21 |
| A | JP 2020-203997 A (ASAHI KASEI CORP) 24 December 2020 (2020-12-24)<br>entire text | 19-21 |
| A | JP 2017-171830 A (INST NATIONAL COLLEGES TECH JAPAN) 28 September 2017 (2017-09-28)<br>entire text | 19-21 |

Form PCT/ISA/210 (second sheet) (January 2015)

**INTERNATIONAL SEARCH REPORT**

International application No.
**PCT/JP2023/017958**

**Box No. III Observations where unity of invention is lacking (Continuation of item 3 of first sheet)**

This International Searching Authority found multiple inventions in this international application, as follows:

(i) The number of inventions described in the following claims of the international application is 2, and the inventions are classified into
(Invention 1) Claims 1-6, 7-14, and 15-18
(Invention 2) Claims 19, 20, and 21

(ii) For the following reasons, it is considered that the present international application does not comply with the requirement of unity of invention (Enforcement Rule 13 (PCT Rules 13.1, 13.2 and 13.3))

(Invention 1) Claims 1-6, 7-14, and 15-18

Document 1 indicates that a composite material (claims 1, 3) includes carbon fiber base material, a structure composed of a plurality of carbon nanotubes in a bent shape with bent portions, forming a network structure having contact portions in which the carbon nanotubes are in direct contact with each other, and directly attached to the surface of the carbon fiber base material, and a first sizing agent provided at least around the contact portion and crosslinking the carbon nanotubes in direct contact through a structure derived from carbodiimide reacted with a functional group of the carbon nanotube and a carbodiimide group. In addition, document 1 indicates, "matrix resin 32 is not particularly limited, and various thermosetting resins and thermoplastic resins can be used... as thermoplastic resins, for example such as a general-purpose resins such as polyethylene, polypropylene, polyvinyl chloride, polystyrene, acrylonitrile/styrene (AS) resin, acrylonitrile/butadiene/styrene (ABS) resin, methacrylic resin (PMMA, etc.), and thermoplastic epoxy resin, engineering plastics such as polyamide, polyacetal, polyethylene terephthalate, ultra-high molecular weight polyethylene, polycarbonate, and phenoxy resin, and super engineering plastics such as polyphenylene sulfide, polyether ether ketone, polyether ketone ketone, liquid crystal polymer, polytetrafluoroethylene, polyether imide, polyarylate, and polyimide (paragraph [0081]). Example 3 discloses " producing a cylindrical molded body with a diameter of about 2.6 mm was directly from the composite material 10 and the matrix resin by the extrusion molding" (paragraph [0129]).

The invention according to claim 1 specifies that the invention is an "injection molded body," but differs from the invention in document 1 in that the invention does not specify such feature, and is identical thereto otherwise.

Accordingly, claims 1-6 and 7-14 have the special technical feature of a "injection molded body," and are thus classified as invention 1.

In addition, considering the description that "the mechanical strength of the injection molded body can be further improved by post-curing the sizing agent," (paragraph [0013]) it is understood that the invention in claims 15 to 18 is closely related to the invention in claim 1. Therefore, the invention is classified as invention 1.

Thus, claims 1-6, 7-14, and 15-18 are classified as invention 1.

(Invention 2) Claims 19, 20 and 21

Claims 19, 20, and 21 share, with claim 1 classified as invention 1, the common technical feature of a "composite of carbon fiber and resin provided on the surface of a structure that is composed of a plurality of carbon nanotubes in a curved shape with bent portions and forms a network structure that has contact portions in which the carbon nanotubes are in direct contact with each other."

However, said technical feature does not make a contribution over the prior art in light of the disclosure of document 1, and thus cannot be said to be a special technical feature.
Also, there are no other same or corresponding special technical features between these inventions.

In addition, claims 19, 20, and 21 are not dependent on claim 1. Also, claims 19, 20, and 21 are not substantially identical to or similarly closely related to any of the claims classified as invention 1.
Thus, claims 19, 20, and 21 cannot be classified as invention 1.

In addition, claims 19, 20, and 21 have the special technical feature of a "structure composed of a plurality of carbon nanotubes in a curved shape having bent portions, forming a network structure having contact portions in

**INTERNATIONAL SEARCH REPORT**

International application No.
**PCT/JP2023/017958**

**Box No. III Observations where unity of invention is lacking (Continuation of item 3 of first sheet)**

which the carbon nanotubes are in direct contact with each other, wherein the resin of the composite of carbon fiber and resin provided on the surface of the structure is removed" and are thus classified as invention 2.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

**INTERNATIONAL SEARCH REPORT**
**Information on patent family members**

International application No.
**PCT/JP2023/017958**

| Patent document cited in search report | Publication date (day/month/year) | Patent family member(s) | Publication date (day/month/year) |
|---|---|---|---|
| WO 2022/114217 A1 | 02 June 2022 | TW 202231740 A | |
| WO 2022/114225 A1 | 02 June 2022 | TW 202236777 A | |
| JP 2013-513020 A | 18 April 2013 | US 2011/0297892 A1<br>entire text<br>WO 2011/072071 A1<br>EP 2509918 A1<br>CA 2779709 A<br>AU 2010328139 A<br>CN 102648155 A<br>KR 10-2012-0124404 A<br>ZA 201203339 B<br>BR 112012013904 A | |
| WO 2017/169482 A1 | 05 October 2017 | US 2019/0144616 A1<br>entire text<br>CN 108779337 A | |
| JP 2003-238816 A | 27 August 2003 | (Family: none) | |
| JP 2004-134515 A | 30 April 2004 | (Family: none) | |
| JP 8-059303 A | 05 March 1996 | US 5728432 A<br>entire text<br>US 5958516 A<br>US 6127029 A<br>US 6127477 A<br>DE 19529631 A1 | |
| JP 2015-110747 A | 18 June 2015 | US 2016/0264740 A1<br>entire text<br>WO 2015/064483 A1<br>EP 3064551 A1<br>TW 201522429 A<br>KR 10-2016-0079806 A<br>CN 105683293 A<br>TW 201841997 A | |
| WO 2019/049581 A1 | 14 March 2019 | US 2021/0122888 A1<br>entire text<br>CN 111051604 A<br>TW 201920802 A | |
| US 2019/0382269 A1 | 19 December 2019 | US 2019/0308905 A1<br>entire text | |
| JP 2020-203996 A | 24 December 2020 | (Family: none) | |
| JP 2020-203997 A | 24 December 2020 | (Family: none) | |
| JP 2017-171830 A | 28 September 2017 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008008404 A
- WO 2019240094 A1
- JP 2007238753 A


### Non-patent literature cited in the description


- *CHEMICAL ABSTRACTS*, 872-50-4